# EUROPEAN PATENT APPLICATION

(11) **EP 4 822 633 A1**
(43) Date of publication of application: **14.10.2026**
(21) Application number: 26171614.6
(22) Date of filing: 10.04.2026
(51) Int. Cl.: G06Q 40/03, G06Q 20/12, G06Q 20/24

(54) **METHOD AND APPARATUS FOR INTEGRATION OF PLANNED PURCHASES WITH PRE-APPROVED OR POST-PURCHASE FINANCING TERMS INTO FINANCIAL TRANSACTIONS INVOLVING THIRD PARTIES**

(30) Priority: 11.04.2025 US 202563787282 P; 08.09.2025 US 202519322241
(71) Applicant: Affirm, Inc., San Francisco, CA 94108 (US)
(72) Inventor: BAKSHI, Sahil, San Francisco, 94108 (US); FISHER, Duncan, San Francisco, 94108 (US); DUGGAN, Laurence, San Francisco, 94108 (US); LU, Amy, San Francisco, 94108 (US); KONDRAT, Dominik, San Francisco, 94108 (US); SHAH, Mayank, San Francisco, 94108 (US); TWOMEY, Matt, San Francisco, 94108 (US)
(74) Representative: Piotrowicz, Pawel Jan Andrzej

(57) **Abstract**

A method of providing partner integration into processing a facilitator granted, loan backed, identified customer transaction initiated via a partner application or payment card may include receiving, at the facilitator, a request for onboarding to a platform capable of matching the identified customer transaction to a loan from a partner, providing, by the facilitator, a partner integration package to the partner for storage and execution at a hardware platform of the partner in response to approval of the request for onboarding, receiving, by the facilitator, transaction data from the partner based at least in part on execution of the partner integration package at the hardware platform of the partner, performing, by the facilitator, a matching algorithm relative to the transaction data received to identify a matched transaction as the identified customer transaction, communicating, by facilitator, an identity of the matched transaction to the partner, and attributing, at the facilitator, the matched transaction to the loan responsive to receipt of an indication of authorization by the partner.

## Description

### TECHNICAL FIELD

Example embodiments generally relate to financial industry technologies and, in particular, relate to apparatuses, systems, and methods for facilitating commerce and for enabling customers to obtain financing terms for a purchase via a third party in advance or post-purchase, and correlate the later occurrence of the purchase to the financing terms seamlessly through platform level integration with third parties.

### BACKGROUND

The financial industry is comprised of many thousands of customers, merchants, lenders, borrowers, and other role players that all interact in various ways to enable customers to ultimately have access to goods and services provided by merchants. Credit and debit transactions have long been a way that individuals have managed point of sale transactions to ensure seamless transfer of funds from customers, or on their behalf, to merchants for relatively routine or small transactions. Meanwhile, obtaining a loan from a bank has long been the most common way of obtaining financing for non-routine or larger transactions.

In each of the cases above, a relatively rigid and pre-planned sequence of activities occurs before, during, and after the transaction is closed. The customer makes the decision up front as to which mechanism to employ, and the handling of the entire transaction after that initial decision is made follows existing and well-known paths to completion. While there is great flexibility in that many options are available to customers (particularly those with good credit), there is not much flexibility at all after the decision is made as to which option to select.

Credit cards and certain other lending vehicles may be useful tools for many customers. However, some customers can find themselves over extended either quickly or over a period of time based on the existing tools. This phenomenon has repeated itself over generations, and for millions of customers. Thus, there is now a deep desire on the part of many to create flexible and fair means of supporting customer purchasing activities that is both honest and transparent, and that also improves the lives of customers.

Installment loans, or buy now, pay later financing, have become a popular tool in relation to addressing the issues noted above. However, even this popular tool typically gets employed at the time a purchase is being undertaken. For example, the customer may select a product of interest and proceed to checkout (virtually or at a brick and mortar store) to purchase the product. The payment means selected to pay the merchant for the product may be a physical or virtual card that is linked to accounts that enable an installment loan to be granted to the customer, and funds may be transferred to the merchant on behalf of the customer for purchase of the product, if the customer is approved for the installment loan.

This process is, in many cases, desirably enhanced to try to make the user experience as positive as possible by, for example, making decisions on approval faster, or by making various aspects of obtaining or servicing the loan easier. However, the user nevertheless faces some risk that the loan may not be approved, and the embarrassment or annoyance of being denied approval at checkout can be very frustrating for some users. Enhancements to the user experience in this context have been attempted, but those enhancements inevitably encounter difficulty in execution when multiple parties are involved in transactions. In this regard, if the card being used is associated with one financial institution, and a different loan facilitator will provide the loan for the transaction, communications infrastructure must be provided to enable coordination to support such a scenario. Thus, there remains a need to employ technical means to manage the complication of ensuring coordinated communication and action to support these types of transactions.

In yet another example embodiment, a method of enabling coordination of loan issuance via a facilitator for a customer transaction initiated via a partner application or payment card may be provided. The method may include receiving a request for onboarding to a platform capable of matching the pre-purchase identified customer transaction to a loan from a partner, and providing a partner integration package to the partner for storage and execution at a hardware platform of the partner in response to approval of the request for onboarding. The method may further include receiving transaction data from the partner associated with a past transaction of the customer initiated via the partner application or the payment card that is eligible for the loan issuance by the facilitator based at least in part on execution of the partner integration package at the hardware platform of the partner, communicating, by the facilitator, approval to assume the loan issuance to the partner, and transferring funds from the facilitator to the partner to have the facilitator assume the loan issuance and adjusting a balance of the customer with the partner accordingly.

### BRIEF SUMMARY OF SOME EXAMPLES

Accordingly, some example embodiments may enable the provision of technical means by which to give customers the ability to plan or convert a previous purchase and obtain loan terms and approval for a financing program (or installment loan). Thereafter, when a transaction occurs, even if that transaction is executed using a payment card or application associated with a partner of the loan facilitator, the transaction can be correlated or converted to the installment loan, but enable the facilitator to handle the loan instead of the partner. Such power may enable customers to have access to financing options with confidence and convenience via an instrument such as a debit card or credit card (e.g., a payment card) whether virtual or physical associated with their typical bank..

In an example embodiment, a method of providing partner integration into processing a facilitator granted, loan backed, identified customer transaction initiated via a partner application or payment card may be provided. The method may include receiving, at the facilitator, a request for onboarding to a platform capable of matching the identified customer transaction to a loan from a partner, providing, by the facilitator, a partner integration package to the partner for storage and execution at a hardware platform of the partner in response to approval of the request for onboarding, receiving, by the facilitator, transaction data from the partner based at least in part on execution of the partner integration package at the hardware platform of the partner, performing, by the facilitator, a matching algorithm relative to the transaction data received to identify a matched transaction as the pre-purchase identified customer transaction, communicating, by facilitator, an identity of the matched transaction to the partner, and attributing, at the facilitator, the matched transaction to the loan responsive to receipt of an indication of authorization by the partner. The transaction data may be associated with transactions initiated via the partner application or the payment card.

In another example embodiment, an apparatus for providing partner integration into processing a facilitator granted, loan backed, identified customer transaction initiated via a partner application or payment card may be provided. The apparatus may include processing circuitry configured for receiving, at the facilitator, a request for onboarding to a platform capable of matching the identified customer transaction to a loan from a partner, providing, by the facilitator, a partner integration package to the partner for storage and execution at a hardware platform of the partner in response to approval of the request for onboarding, receiving, by the facilitator, transaction data from the partner based at least in part on execution of the partner integration package at the hardware platform of the partner, performing, by the facilitator, a matching algorithm relative to the transaction data received to identify a matched transaction as the pre-purchase identified customer transaction, communicating, by facilitator, an identity of the matched transaction to the partner, and attributing, at the facilitator, the matched transaction to the loan responsive to receipt of an indication of authorization by the partner. The transaction data may be associated with transactions initiated via the partner application or the payment card.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a selective financing and payment platform according to an example embodiment;
FIG. 2 illustrates a functional block diagram of an apparatus for defining a facilitation agent according to an example embodiment;
FIG. 3 illustrates a block diagram showing control flow for account setup in accordance with an example embodiment;
FIG. 4 illustrates a block diagram for control flow associated with initial transaction handling in accordance with an example embodiment;
FIG. 5 illustrates a block diagram of control flow for defining a future purchase to associate with a loan in accordance with an example embodiment;
FIG. 6 shows a block diagram of control flow for handling a transaction that may be mapped to the previously defined future purchase in accordance with an example embodiment;
FIG. 7 is a block diagram showing how funds flow between parties in accordance with an example embodiment;
FIG. 8 illustrates a method for managing a customer transaction in accordance with an example embodiment;
FIG. 9A illustrates a functional block diagram of a different construct than that of FIG. 1 for providing different interactions for the selective financing and payment platform according to an example embodiment;
FIG. 9B illustrates a block diagram of a system for integrating a partner of a facilitator into a loan matching process in accordance with an example embodiment;
FIG. 10 illustrates a block diagram of process flow according to an example embodiment;
FIG. 11 illustrates a series of screen interfaces associated with pre-purchase flow in a partner web application in accordance with an example embodiment;
FIG. 12 illustrates a series of screen interfaces associated with post-purchase flow in a partner web application in accordance with an example embodiment;
FIG. 13 illustrates a block diagram of a method of providing partner integration into processing a facilitator granted, loan backed, pre-purchase identified customer transaction initiated via a partner application or payment card in accordance with an example embodiment;
FIG. 14 illustrates a block diagram of a method of enabling coordination of loan issuance via a facilitator for a customer transaction initiated via a partner application or payment card in accordance with an example embodiment; and
FIG. 15 illustrates a block diagram of a flow of funds in accordance with various example embodiments.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other. As such, the data processing platform may be embodied as a selective financing and payment platform (i.e., SFP platform) that connects customers and merchants (or vendors) to banks, payment services, and a transaction facilitator within the financial industry. By enabling data between the players on or members of the platform to be shared, and by further providing customers with tools for using the platform to manage (or plan) financing of individual transactions even before the transactions occur, customers may have increased flexibility for managing their funds in a way that prevents over-extension, while still maximizing their access to the goods and services they desire or need at any given time. Moreover, the platform may be employed under the management of the facilitator to control the usage of data on mutually agreeable terms for all participants who access the platform. Accordingly, a commercial framework can be provided by a technical platform designed to connect customers with access to financial support to effect transactions in real time without the need for obtaining approval for a loan at the time of the transaction. In other words, instead of merely initiating a platform for supporting installment loan (or other financing options) decisions at the time of the transactions, example embodiments provide customers with technical means by which to obtain financing ahead of time for a particular transaction, and then map the transaction to the financing option that was previously obtained when the transaction occurs. This stands in contrast to today's paradigm in which either a loan is applied for at the time of the transaction, or a "pre-approved" loan amount is generically promised without specific loan terms being agreed upon (again until the transaction occurs). The loan can be agreed upon, and the transaction can be conducted and mapped to the loan all before any movement of funds or money occurs. The creation of one platform, managed by the facilitator, for the interaction of multiple parties to enable a prior determination of whether a loan having agreed upon loan terms can be granted to support a transaction so that the transaction can later be conducted and tied to the loan provides a flexible and yet cohesive experience for customers that maximizes responsible access to financial freedom and satisfaction.

Within this context, a transaction is considered "settled" when all parties involved in the transaction have received any payments or funds that may be owed to them. Thus, if cash is paid to the merchant by the customer, the transaction is immediately settled. For a credit card purchase, the transaction may be settled when the merchant has received funds from a bank associated with the credit card, and the customer has paid the bank accordingly so that the bank has also received the funds it advanced on behalf of the customer to the merchant. For a debit card purchase, the transaction may be settled when the merchant has received funds from a bank associated with the debit card, and the bank has debited the customer's account accordingly so that the bank has also received the funds it advanced on behalf of the customer to the merchant. Example embodiments may allow a transaction to proceed as if a normal credit or debit card purchase as far as the merchant is concerned, but a loan or financing option (e.g., an installment loan or a buy now, pay later loan) that was previously associated with the transaction before it occurred, is mapped to the transaction and instantiated after the transaction occurs. In this context, a buy now, pay later loan should be considered to be an installment loan, or a loan that has a fixed payment amount and term for making such payments. In other words, the buy now, pay later or installment loan does not have a conventional interest rate that applies over whatever indeterminate period of time the customer chooses to keep the loan by not paying off the entire principal. It should be appreciated that example embodiments may apply to any debit card, credit card, bank applications, or other electronic payment methods including for transactions that involve both pre and post purchase loan associations.

Example embodiments not only provide the SFP platform, but also provide various enabling technologies that may facilitate operation of the SFP platform itself or of modules that may interact with the SFP platform. Example embodiments may also provide for enhancement of functionalities associated with the environment that is created by the SFP platform. The SFP platform may provide a mechanism by which to enhance commerce in a responsible way that is both empathetic and empowering to customers.

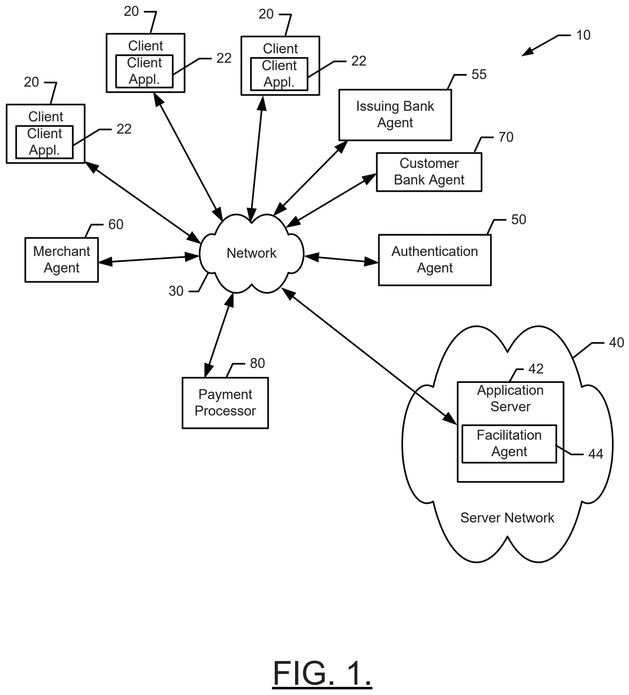

An example embodiment will now be described in reference to FIG. 1, which illustrates an example system in which an example embodiment may be employed. As shown in FIG. 1, a system comprising an SFP platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system. Furthermore, in some cases, some embodiments may be practiced on a single client without any connection to the system.

The clients 20 may, in some cases, each be associated with a single individual or customer. However, in some embodiments, one or more of the clients 20 may be associated with an organization (e.g., a company) or group of individuals (e.g., a family unit). In general, the clients 20 may be referred to as members of the environment or community associated with the SFP platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 42), and/or a database server, which together may form respective elements of a server network 40. Although the application server 42 and the database server are each referred to as "servers," this does not necessarily imply that they are embodied on separate servers or devices. As such, for example, a single server or device may include both entities and the database server could merely be represented by a database or group of databases physically located on the same server or device as the application server 42. The application server 42 and the database server may each include hardware and/or software for configuring the application server 42 and the database server, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to the SFP platform 10, and more particularly relating to facilitating transactions where the details of setting the transaction will be determined after the transaction. For example, the application server 42 may be configured to provide for storage of information descriptive of events or activities associated with the SFP platform 10 and the execution of a financial transaction on behalf of a customer in real time, while delaying the customers decision on how to settle the transaction to a later time. In some cases, data and/or services may be exchanged amongst members, where specific needs or desires of the members are aligned with respect to playing their respective roles in connection with conducting a financial transaction, and enabling the settlement method for the transaction to be determined at a later time.

In some embodiments, for example, the application server 42 may therefore include an instance of a facilitation agent 44 comprising stored instructions for handling activities associated with practicing example embodiments as described herein. The facilitation agent 44 may be a technical device, component or module affiliated with the facilitator of the functioning of the SFP platform 10. Thus, the facilitation agent 44 may operate under control of the facilitator to be a technical means by which to carry out activities under direction of the facilitator or employees thereof. As such, in some embodiments, the clients 20 may access the SFP platform 10 services, and more particularly contact the facilitation agent 44 online and utilize the services provided thereby. However, it should be appreciated that in other embodiments, an application (e.g., the client application 22) enabling the clients 20 to interact with the facilitation agent 44 (or components thereof) may be provided from the application server 42 (e.g., via download over the network 30) to one or more of the clients 20 to enable recipient clients to instantiate an instance of the client application 22 for local operation such that the facilitation agent 44 may be a distributor of software enabling members or parties to participate in operation of the SFP platform 10. Alternatively, another distributor of the software may provide the client 20 with the client application 22, and the facilitation agent 44 may communicate with the client 20 (via the client application 22) after such download.

In an example embodiment, the client application 22 may therefore include application programming interfaces (APIs) and other web interfaces to enable the client 20 to conduct business via the SFP platform 10. The client application 22 may include a series of control consoles or web pages including a landing page, onboarding services, activity feed, account settings (e.g., user profile information), transaction management services, payment management services and the like in cooperation with a service application that may be executed at the facilitation agent 44. Thus, for example, the client application 22 may enable the customer to review monthly statements, request a physical credit or debit card, turn on or off a virtual or digital card, access or adjust information associated with the customer account, or receive help or other information. Budgeting tools and other useful information and other useful tools for managing the finances of the customer may also be available via the client application 22 in some cases.

In an example embodiment, the application server 42 may include or have access to memory (e.g., internal memory or the database server) for storing instructions or applications for the performance of various functions and a corresponding processor for executing stored instructions or applications. For example, the memory may store an instance of the facilitation agent 44 configured to operate in accordance with an example embodiment of the present invention. In this regard, for example, the facilitation agent 44 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal (e.g., a computer including a user interface) via which individual operators or managers of the entity associated with the facilitation agent may interact with, configure or otherwise maintain the SFP platform 10 and/or the facilitation agent 44.

As such, the environment of FIG. 1 illustrates an example in which provision of content and information associated with the financial industry (e.g., including at least some data provided to/from customers and/or merchants in real-time) may be accomplished by a particular entity (namely the facilitation agent 44 residing at the application server 42). Thus, the facilitation agent 44 may be configured to handle provision of content and information associated with tasks that are associated only with the SFP platform 10. Access to the facilitation agent 44 may therefore be secured as appropriate for the individuals or organizations involved and credentials of individuals or organizations attempting to utilize the tools provided herein may be managed by digital rights management services or other authentication and security services or protocols that are outside the scope of this disclosure.

The SFP platform 10 may also operate in cooperation with a bank authentication agent 50, an issuing bank agent 55, a merchant agent 60, a customer bank agent 70, and a payment processor 80. The facilitation agent 44 may be configured to interact with, or otherwise facilitate interactions between, each of the bank authentication agent 50, the issuing bank agent 55, the merchant agent 60, the customer bank agent 70, and the payment processor 80 in order to carry out example embodiments as described herein. Thus, each of the bank authentication agent 50, the issuing bank agent 55, the merchant agent 60, the customer bank agent 70, and the payment processor 80 should be understood to be a computer, server, smart phone, or other technical component or module associated with a respective party (e.g., aq authenticating bank, issuing bank, a merchant, a customer bank, and a payment service, respectively) that is capable of communication with other parties via the network 30, and under control of or responsive to facilitating communication by the facilitation agent 44.

The issuing bank may be a bank or other financial services provider. The issuing bank may have a persistent relationship with the entity associated with the facilitation agent 44 (e.g., the facilitator), but generally need not have any persistent or pre-existing relationship with the customer or the customer bank. The issuing bank may be contracted with or otherwise have a pre-existing relationship with the facilitation agent 44 (and entity associated therewith) that enables the facilitation agent 44 to facilitate transactions on behalf of the customer when certain conditions (agreed upon in advance by the entity associated with the facilitation agent 44 and the issuing bank) are met associated with a transaction undertaken (or attempted) by the customer via the client 20 and client application 22. For example, the issuing bank may be the issuer of the debit or credit card on behalf of the facilitation agent 44 and be responsible for directly paying the merchants and merchants during a transaction initiated by the customer via the debit or credit card.

The bank authenticator may be an agent or financial service provider capable of granting the facilitation agent 44 access to the customer bank to view account balances and credentials. The balances and credentials may be used or relied upon to pull or push funds from or to the customer bank using the payment processor 80. Thus, for example, the bank authenticator may utilize its own software, application programming interfaces (APIs) or the like that define an infrastructure or intermediary platform to connect a customer's bank account with the facilitation agent 44.

The customer bank may be a bank at which the customer (i.e., associated with one of the clients 20) deposits money in a bank account such as a savings account or a checking account and has an associated payment card (e.g., debit card). In an example embodiment, the customer may subscribe or register to a service or request a card (e.g., a credit card, debit card or other virtual or digital card) from the facilitation agent 44 to enroll the customer as a member of the SFP platform 10. During subscription or registration, the customer may be prompted (via the client 20 and client application 22) by the facilitation agent 44 to provide account details identifying the savings account or checking account (i.e., a customer account) at the customer bank. The customer may, by registering or subscribing, further authorize the facilitation agent 44 to conduct specific activities related to the customer account when corresponding conditions are met, which may be facilitated by one of or a combination of the bank authenticator and the issuing bank as described above. The activities may include checking account status (i.e., checking a current balance of funds deposited in the customer account) and/or authorizing withdrawal of funds from the customer account by the payment processor 80 in order to settle a transaction or make payments to the facilitation agent 44.

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online.

The customer bank agent 70 may change for each respective one of the clients 20 (and therefore for each respective customer). Similarly, the merchant agent 60 may change for each respective transaction since different merchants may be involved in different transactions involving the clients 20. In some examples, the bank authentication agent 50 and the payment processor 80 may remain the same entities across all transactions managed by the facilitation agent 44. However, the facilitation agent 44 could use different bank authentication agents in different geographic areas or jurisdictions, and the payment processor 80 may also change on the same bases. In some cases, the facilitation agent 44 may use different bank authentication agents 50 in order to ensure all customers' banks can be accommodated. For example, if the customer bank was not serviced by a first bank authentication agent, the facilitation agent 44 is configured to swap in a second bank authentication agent that would allow for servicing of the customer bank. Accordingly, the facilitation agent 44 is configured to swap each of the payment processors 80 and bank authentication agents 50 under certain circumstances. For example, the bank authentication agent 50 may be swapped by the facilitation agent 44 if the bank authentication agent 50 is temporarily offline or if the bank authentication agent 50 did not support a customer bank.

As noted above, the SFP platform 10 may operate to enable the customer associated with a given one of the clients 20 to make a purchase in real time from a merchant associated with the merchant agent 60. In some example embodiments, the client application 22 may be used in connection with setting up the account details that are then used as the basis for managing interactions between the parties shown in FIG. 1 under control of the facilitation agent 44. In this regard, for example, the client application 22 may be used to engage (e.g., via a website and corresponding APIs) with the facilitation agent 44 to set up an account with the facilitation agent 44 for services associated with the SFP platform 10. The facilitation agent 44 may prompt the client 20 to provide account details associated with the customer bank agent 70 and may provide terms and conditions (electronically or via mail or other communication means) that the customer may accept to establish a user profile and user account with the facilitation agent 44. In some cases, the customer may be provided with a card (e.g., a debit card or credit card) or other physical implement that can be used to initiate transactions with merchants. As noted above, the card may be issued by the issuing bank. The card may be associated with the user account, and may provide identifying information needed to initiate operation of the SFP platform 10 (and the facilitation agent 44) as described herein when the customer uses the card to make a purchase with a merchant. The card may be physically presented for such purpose and magnetic strip, chip or other technologies may be used in connection with initiating the transaction. Otherwise, the card number provided on the card may be unique to the user account, and may be provided to the merchant to initiate the transaction. Finally, as an additional or alternative way to initiate a transaction, the card may be virtual and may exist in a mobile wallet or other smartphone context for initiating transactions online. In such a context, the client application 22 may also or alternatively be the means by which the transaction is initiated or handled. Thus, it should be appreciated that the client application 22 could be used to set up the user account and user profile and/or to conduct individual transactions.

During establishment of the user account, the customer may provide an identification of the customer bank associated with the customer bank agent 70, and may also provide details for the savings or checking account that the customer maintains at the customer bank. The customer may also authorize the facilitation agent 44 to make real time (or anytime) checks on account status (e.g., account balance) or to make periodic routine checks of the same. Thus, for example, for each transaction, the facilitation agent 44 may be enabled to check the account balance or historic transactions of the customer. Alternatively or additionally, the facilitation agent 44 may make routine checks or snapshot looks at the account balance. For example, a check may be made every day at a certain time, every two or three days, or at other standard or random intervals. The account status of the customer bank may be used by the facilitation agent 44 in facilitating payment transactions, and deferred decision making as to how to settle such transactions as described in greater detail below.

The issuing bank may have an agreement or relationship with the entity associated with the facilitation agent 44 that enables the facilitation agent 44 to engage the issuing bank to extend funds to a merchant or vendor on behalf of the customer in response to instruction from the facilitation agent. The facilitation agent 44 may therefore coordinate communications and funds transferring between members or parties of the SFP platform 10 to facilitate payment transactions that can be handled in ways selected specifically by the customer. In this regard, the customer may approach the merchant (physically or virtually) in order to initiate a transaction. The card (virtual or physical) associated with the customer bank account may be provided for payment, and the corresponding indication of a pending transaction may be communicated (e.g., via the SFP platform 10 by the merchant agent 60 and/or the client 20 via the network 30. The transaction may be mapped, via the facilitation agent 44, to a previously planned purchase for which a loan is approved and flow of funds reserved for the loan may be managed without any further need for customer interaction. Alternatively or additionally, the transaction may be mapped, again via the facilitation agent 44, to a prior purchase to which an approved loan can be linked such that flow of funds reserved for the loan can be handled, again without any further need for customer interaction. The communication and activities that ensue from the basic descriptions above will now be described greater detail below.

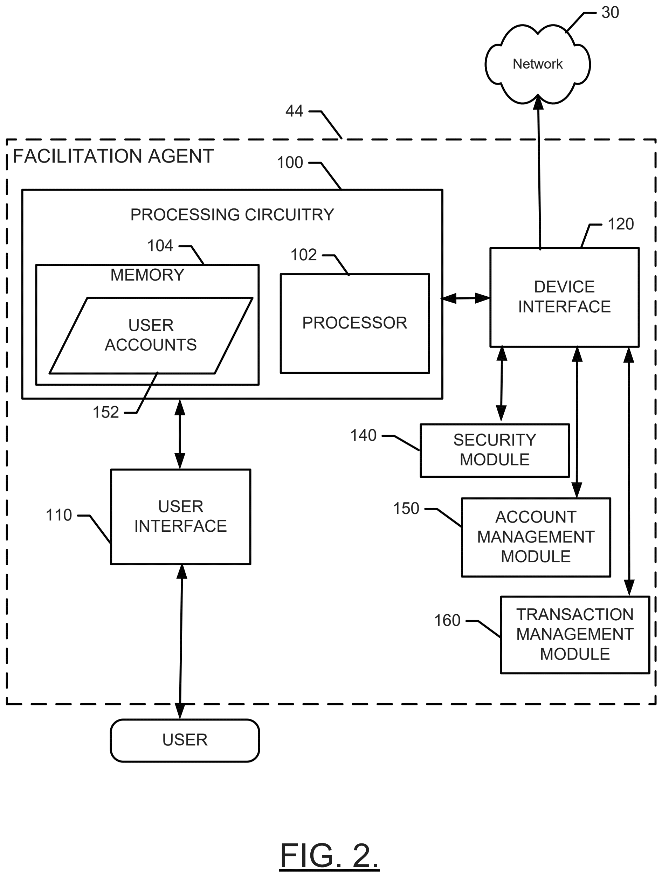

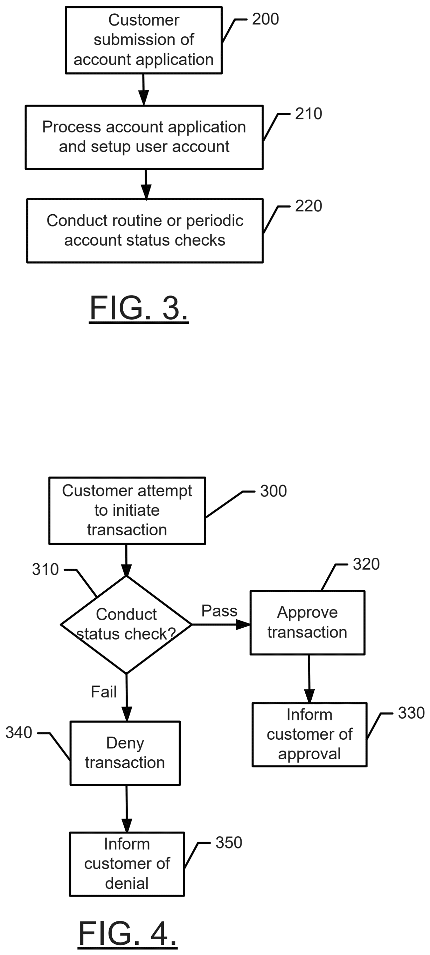

Regardless of how the transactions are initiated, the SFP platform 10 of FIG. 1 may be used before, during and after the time of the transaction in order to enable the facilitation agent 44 to set up the user account, make determinations necessary to approve a loan in association with a planned transaction prior to its initiation, or a prior transaction after initiation, conduct the transaction in real time responsive to initiation of the transaction, facilitate flow of funds and issuance of the loan responsive to mapping the transaction to the planned transaction or prior purchase and corresponding loan, and managing the flow of funds accordingly at the appropriate time. Each of these activities may have its own respective timing and communications that are facilitated by the facilitation agent 44 and FIGS. 3-6 illustrate example control flows associated with various scenarios. However, prior to examining each respective scenario, the structures associated with an apparatus at which the facilitation agent 44 of an example embodiment may be instantiated will be described in reference to FIG. 2.

FIG. 2 shows certain elements of an apparatus for provision of the facilitation agent 44 or other processing circuitry according to an example embodiment. The apparatus of FIG. 2 may be employed, for example, as the facilitation agent 44 itself operating at, for example, a network device, server, proxy, or the like (e.g., the application server 42 of FIG. 1)). Alternatively, embodiments may be employed on a combination of devices (e.g., in distributed fashion on a device (e.g., a computer) or a variety of other devices/computers that are networked together). Accordingly, some example embodiments may be embodied wholly at a single device (e.g., the application server 42) or by devices in a client/server relationship (e.g., the application server 42 and one or more clients 20). Thus, although FIG. 2 illustrates the facilitation agent 44 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the facilitation agent 44 or a device of the SFP platform hosting the facilitation agent 44. As such, configuration of the apparatus as described herein may transform the apparatus into the facilitation agent 44. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 100 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the facilitation agent 44, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 as described below.

The facilitation agent 44 may be configured to include tools to facilitate the creation of customer or user accounts (and a corresponding user profile), and the coordination of communication and fund transfers to support the operations of the SFP platform 10 as described herein. The tools may be provided in the form of various modules that may be instantiated by configuration of the processing circuitry 100. FIG. 2 illustrates some examples of modules that may be included in the facilitation agent 44 and that may be individually configured to perform one or more of the individual tasks or functions generally attributable to the facilitation agent 44 according to an example embodiment. However, the facilitation agent 44 need not necessarily be modular. In cases where the facilitation agent 44 employs modules, the modules may, for example, be configured to perform the tasks and functions described herein. In some embodiments, the facilitation agent 44 and/or any modules comprising the facilitation agent 44 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 and/or any modules thereof, as described herein.

As shown in FIG. 2, the facilitation agent 44 may include a security module 140. The security module 140 may be configured to enforce data security and data/user access control. In some example embodiments, the security module 140 may employ authentication and authorization tools to manage the provision of access to customers or other SFP platform 10 members or entities wishing to access the SFP platform 10. The security module 140 may operate on queries or communications in real time as such queries or communications are occurring.

The facilitation agent 44 may also include an account management module 150. The account management module 150 may be configured to manage storage of and access to information about individual customers including user accounts 152 and corresponding user profiles, which may include descriptive information about settings, approvals, or management paradigms that apply to specific merchants or transactions for each instance of the user accounts 152. The user accounts 152 may include details of the checking or savings account at the customer bank for each customer and respective client 20, and authorizations to check account status for each.

In an example embodiment, the account management module 150 may handle communications with the clients 20 associated with setting up the user accounts 152. The user profile associated with each respective one of the user accounts 152 may include user preferences, entitlements, or authorizations with respect to the amount of financing each user is enabled to take on either in aggregate, on a transaction by transaction basis, on a merchant basis, or with respect to specific types of goods or services. Each transaction may, for example, be authorized only if rules associated with either user preferences or policies that the customer has reviewed and accepted as terms of service are met. Those rules may be established during account setup and recorded for each of the user accounts 152 by the account management module 150.

In an example embodiment, the facilitation agent 44 may also include a transaction management module 160. The transaction management module 160 may coordinate or facilitate all communications with the parties to the SFP platform 10 in association with each transaction that is initiated by a customer, whether that transaction is planned by a customer in advance or not. As such, the transaction management module 160 may be configured to handle communications with the client 20, the merchant agent 60, the customer bank agent 70, the bank authentication agent 50, the issuing bank agent 55, and the payment processor 80 as described in greater detail below in response to and prior to handling a transaction. In the responsive case, for example, the transaction management module may receive an indication of a pending transaction and, within a predetermined period of time (e.g., 3 seconds) make a determination as to whether to authorize the transaction or deny the transaction. The decision to authorize or deny the transaction may be made based on either a real time and concurrent check on the account status (e.g., account balance) of the checking or savings account identified in the user account 152, or based on the last snapshot of the account status (assuming the snapshot was taken within a predetermined period of time (e.g., 3 days or less). If the account status is satisfactory, the transaction may be authorized, and further communications and coordination details described below may be handled by the transaction management module 160. The transaction management module 160 may also be configured to, assuming certain criteria are met, provide the customer with options to convert the transaction to an installment loan with predetermined (or customer selected) payment terms.

FIG. 3 illustrates a block diagram of a communication paradigm that is achievable using an example embodiment for setting up a user account. Referring to FIG. 3, a client (e.g., one of the clients 20 of FIG. 1) may make an account application at operation 200. The account application may be submitted to the facilitation agent 44 via the client application 22 and interface with a website or smart phone application for account setup. The account application may include an identification of the customer (or user) and information establishing a confirmation of employment or monthly income for the customer. The account application may also or alternatively provide account details for the savings account and/or checking account that will serve as the primary account from which funds for repaying transactions are extracted. The account application may also include permissions, acknowledgements and any other required communications to authorize setup of the user account 152. In some cases, some or all of this information may be provided by the customer bank agent 80 via the issuer processor 50. At operation 210, the facilitation agent 44 may process the account application and setup the user account incorporating a user profile for the user account. As noted above, the user account may include identifying information for the checking or savings account of the customer. Thereafter, at operation 220, the facilitation agent 44, via the issuer processor 50, may routinely or periodically check the checking or savings account to determine account status and may retain such information for transaction processing as described herein. Periodic checks may occur with a selected periodicity and each check may return a snapshot view of the account status at the corresponding time. Routine checks may be initiated responsive to specific activities such as initiation of a transaction. As noted above, the account management module 150 may handle the processes of the facilitation agent 44 that are covered by the example of FIG. 3.

FIG. 4 is a block diagram of control flow associated with a customer executing a transaction at the point of sale (or online). As shown in FIG. 2, the initial operation of the customer attempting to initiate a transaction with a merchant may occur at operation 300. The customer may physically present the card (e.g., similar to presentation of a debit card or credit card), use a digital card, or may provide card number information if the card is not physically present. Thereafter, the facilitation agent 44 may conduct a status check (e.g., check the account status in real time or based on the last snapshot view) to determine eligibility of the transaction within a predetermined period of time (e.g., about 3 seconds) at operation 310. If the status check passes (e.g., indicating that the checking or savings account has a balance sufficient to cover the transaction), the facilitation agent 44 may approve the transaction and the merchant may receive an indication that the transaction has been approved at operation 320. The merchant may put an authorized hold on funds associated with the amount of the transaction at the authenticating bank. The customer may also receive (e.g., via the client application 22) a push message to indicate that the transaction was approved at operation 330.

If instead, the status check does not pass, then the facilitation agent 44 may deny the transaction and the merchant may receive an indication that the transaction has been denied at operation 340. The customer may also receive (e.g., via the client application 22) a push message to indicate that the transaction was denied at operation 350.

However, as noted above, the transaction management module 160 may enable the identification of a future purchase so that such identified purchase may be evaluated for financing. The transaction management module 160 of some example embodiments may therefore be further configured to interact with the customer prior to a transaction to identify a plan for such transaction, and obtain financing for the transaction in advance. Notably, this is not merely getting pre-approval for a loan, as such pre-approvals are typically granted without regard to any specific transaction, and only instead in relation to the customer's creditworthiness for obtaining a loan without regard to the merchant or item purchased. Example embodiments therefore require additional information to be provided, and technically process that additional information as a condition to receiving approval for not just some future loan amount, but instead for a loan associated with a transaction of a previously planned or future purchase. However, as will be discussed in greater detail below, example embodiments may also be employed in connection with past purchases.

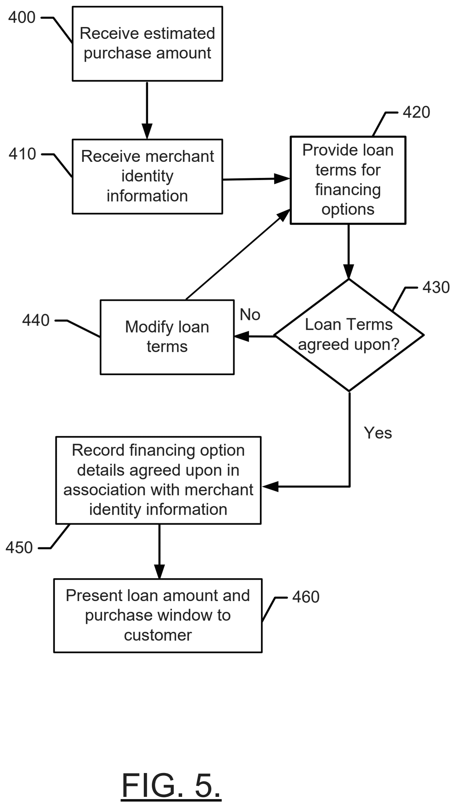

FIG. 5 illustrates a block diagram of some of the operations that the transaction management module 160 may further be configured to perform in association with an example embodiment. In this regard, as shown at operation 400, the transaction management module 160 may receive an estimate from the customer of a purchase amount (e.g., an estimated purchase amount) corresponding to the future purchase. The estimated purchase amount may be accompanied with merchant identity information (e.g., a name of the merchant) in order to make the future purchase recognizable in the future. Operation 410 therefore shows the receipt of the merchant identity information. Loan terms associated with a financing option may then be presented to the customer at operation 420. A determination may then be made as to whether loan terms are agreed upon (for the estimated purchase amount and the identified merchant) at operation 430. If loan terms are not agreed upon at operation 430, then the loan terms may be modified at operation 440, thereby cycling flow back to operation 420 after some modification or options selection to make the financing option acceptable to the customer. Whether immediately, or after such modification as that associated with operation 440, when the customer agrees to loan terms at operation 430, flow may pass to operation 450. At operation 450, the financing option details that have been agreed upon may be recorded (or stored) in association with the merchant identity information. The agreed upon loan amount and a purchase window defining a time during which the loan may be obtained (and therefore a time during which the future purchase must be executed) may then be presented to the customer at operation 460 (e.g., by instruction for display of such information at the client 20) with or without additional information (e.g., the merchant identity information).

All of the activities of FIG. 5 may occur at any time within the time window prior to a subsequent transaction occurring involving a card (e.g., a physical or virtual debit card) associated with the customer. The card may be a card on file or recorded in association with the corresponding one of the user accounts 152 of the customer. However, to this point, no funds (i.e., no money) has moved between any of the entities of FIG. 1. Instead, funds may only be reserved for funding the loan defined by the financing option selected or the agreed upon loan terms.

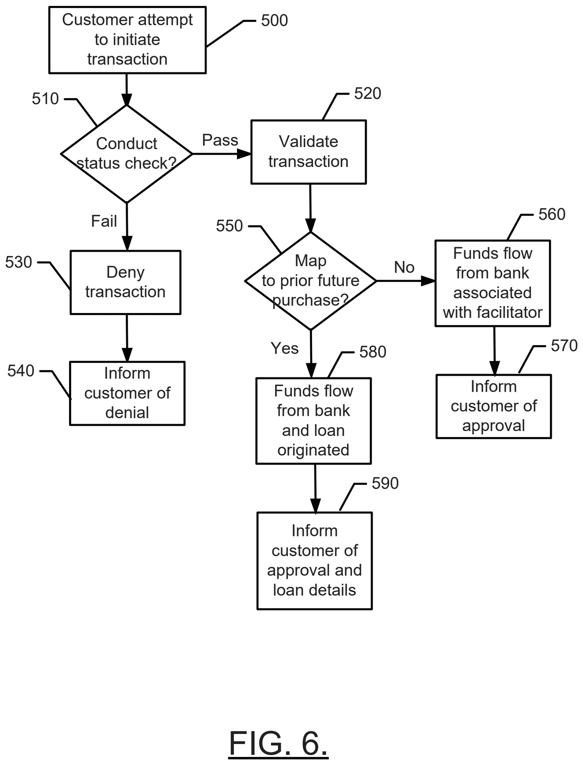

A length of the purchase window may be selected by the transaction management module 160 based on numerous factors. In some embodiments, the length of the purchase window may be consistent for any customer or merchant. In this regard, for example, the length of the purchase window may be selected based on fraud rules that are consistent across all merchants and customers. However, in some cases, the fraud rules or other criteria that are used to define the length of the purchase window may enable lengths to be increased on a customer-by-customer basis based on usage or creditworthiness (e.g., credit rating). Criteria may also vary across merchants, as some merchants may provide funding, or have relationships established with the facilitator, to increase the length of the purchase window. Thus, for example, the length of the purchase window may be fixed, or may vary based on the customer or merchant. The purchase window may also vary based on observable industry patterns. For example, certain industries (e.g., the airline industry) may have an observable pattern with respect to the time periods over which matching should be applied as described herein. Thus, even if specific data is lacking for a merchant, the merchant's industry may be used to select or modify the length of the purchase window. When the transaction occurs, continued operation of the transaction management module 160 may occur as described in reference to FIG. 6.

FIG. 6 is a block diagram of control flow associated with handling of a transaction in accordance with an example embodiment. Notably, FIG. 6 may therefore be similar in some respects to the control flow of FIG. 4 except that FIG. 6 deals with the further unique case of the transaction being a future purchase that was previously identified by the customer, and for which loan terms have already been agreed upon.

Thus, for example, the initial operation of the customer attempting to initiate a transaction with a merchant may occur at operation 500. The customer may physically present the card (e.g., similar to presentation of a debit card or credit card via swipe or tap), use a digital card, or may provide card number information if the card is not physically present. Thereafter, the facilitation agent 44 may conduct a status check to determine eligibility of the transaction within a predetermined period of time (e.g., about 3 seconds) at operation 510 (similar to operation 310 above). If the status check passes, the facilitation agent 44 may validate the transaction and the merchant may receive an indication that the transaction has been approved at operation 520. Funds do not yet move with this validation. If instead, the status check does not pass ####, then the facilitation agent 44 may deny the transaction and the merchant may receive an indication that the transaction has been denied at operation 530. The customer may also receive (e.g., via the client application 22) a push message to indicate that the transaction was denied at operation 540.

If validated at operation 520, a determination may be made as to whether the transaction can be mapped to a previously identified future purchase at operation 550. The facilitation agent 44 may use a collection of rules or criteria for mapping including minimum (or maximum) transaction values, rules regarding presence of the card, and various other identity or transaction specific rules. For example, determining that the transaction maps to the previously identified future purchase may be accomplished by matching transaction amount and merchant identity criteria. Whether transaction amount criteria are met may be determined by comparing an amount of the transaction to the estimated purchase amount. Whether merchant identity criteria are met may be determined by comparing a current merchant identified by the customer to the merchant identity information stored by the facilitation agent 44.

In some example embodiments, the estimated purchase amount must be within a predetermined dollar value, or a predetermined percentage value of the estimated purchase amount to meet the transaction amount criteria. Thus, for example, if the predetermined dollar value is $50, then for the estimated purchase amount was $400, the amount of the transaction must be between $350 to $450 to meet the transaction amount criteria. However, if the predetermined percentage value was instead used and was 10%, then the amount of the transaction must be between $360 and $440 to meet the transaction amount criteria. In some example embodiments, the location of the customer (or entity (e.g., merchant) identified with the transaction) must be within a predetermined distance of a location (e.g., latitude/longitude) of the merchant associated with the merchant identity information in order to meet the merchant identity criteria. Alternatively or additionally, a name of the merchant may match the merchant identity information in order to meet the merchant identity criteria.

If either or both the merchant identity criteria and the transaction amount criteria are not met, the transaction may not be considered to map to a prior future purchase. In such a case, the transaction will remain a debit transaction post swipe. Thus, for example, the merchant may put an authorized hold on funds associated with the amount of the transaction at the authenticating bank and, when the transaction is settled, funds may flow from a bank associated with the facilitator) at operation 560. The customer may also receive (e.g., via the client application 22) a push message to indicate that the transaction was approved and processed as a debit transaction at operation 570.

When both the merchant identity criteria and the transaction amount criteria are met, the transaction may be considered to map to a prior future purchase. In such a case, no funds initially move to support the transaction at the time thereof. Instead, when the merchant submits the transaction for settlement with the facilitator, the facilitator initiates a flow of funds from a bank associated with the facilitator (e.g., the issuing bank) and the loan to which the transaction mapped is originated at operation 580. The customer need not have any awareness to these activities. Instead, after the loan is originated, the transaction information may be used to update the account status of the customer and, for example, if the customer logs into his/her user account, the customer may see an update reflecting the loan originated by the transaction at operation 590. The transaction itself, and the corresponding loan details may be displayed at the client 20. The loan details may include, among other things, an indication of when the next payment is due on the loan. The payment may then be extracted automatically or manually on the schedule defined in the loan details.

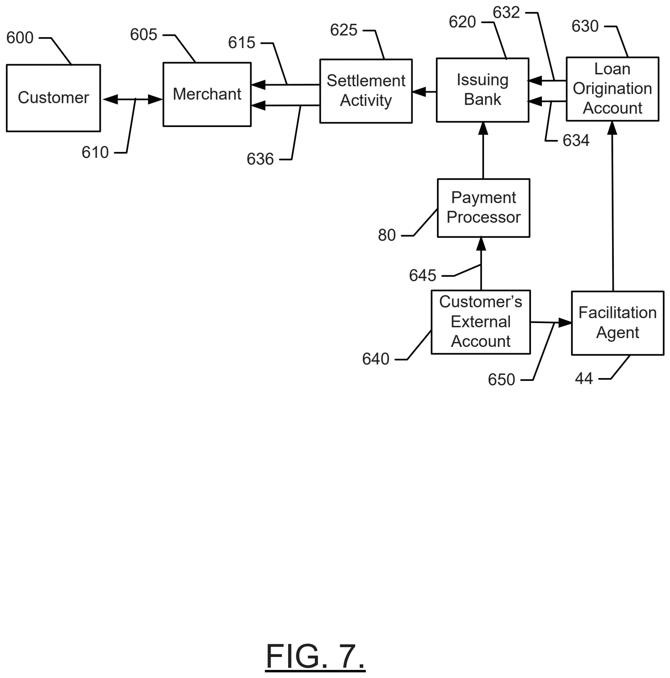

FIG. 7 is a block diagram of control flow associated with flow of funds in accordance with an example embodiment. As shown in FIG. 7, a customer 600 and a merchant 605 may engage in a transaction 610 that maps to a previously identified future transaction, and for which loan terms have been previously agreed upon. The day on which the transaction occurs may be considered to be day 0 in the timeline of events associated with the transaction 610. Also on day 0, and as an immediate result of the transaction being approved via the processes described above, an authorization 615 for funds to be transferred to the merchant 605 may be issued by the issuing bank 620 as part of settlement activity 625. The issuing bank 620 may also conduct a settlement transfer 636 between day 0 and day 7 after the transaction 610 as part of the settlement activity 625.

A facilitator loan origination account 630 may exist (in association with facilitator) and deposits 632 may be provided from the facilitator loan origination account 630 to the issuing bank 620 prior to any debit transactions (i.e., prior to day 0) to ensure that debit transactions are not declined and that settlement may occur (i.e., that funds are available at the issuing bank 620) within a period of time of about two days. Money may also transfer (e.g., about at day 2) for any cases where an installment loan is made using the processes described herein to fund the issuing bank for the captured loan as shown by flow 634. The customer's external account 640 (i.e., at the customer bank) may also be available to transfer funds via the payment processor 80 to the issuing bank 620. In this regard, on about day 1 or 2, first payment funds 645 may be transferred from the customer's external account 640 to the issuing bank 620 via the payment processor 80 under direction of the facilitation agent 44. In some cases, payments 650 may also be made (e.g., at the payment intervals determined by the terms of the installment loan) to the facilitation agent 44 from the customer's external account 640. The facilitation agent 44 may also make transfers to the facilitator loan origination account 630. Thus, all fund transfers to the issuing bank 620 may be conducted under control of the facilitation agent 44.

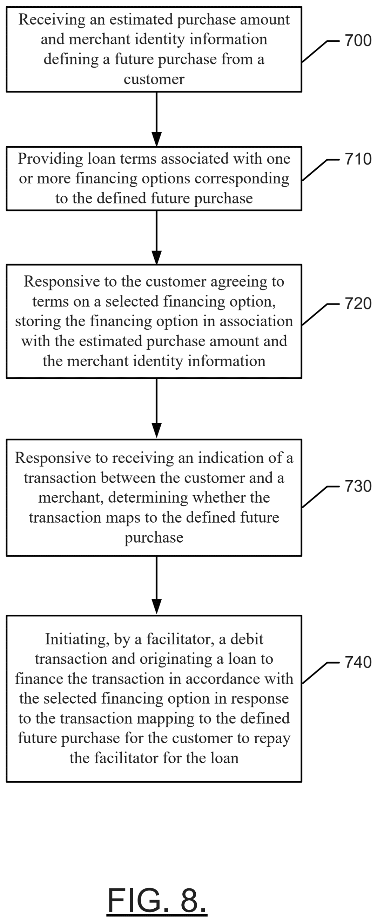

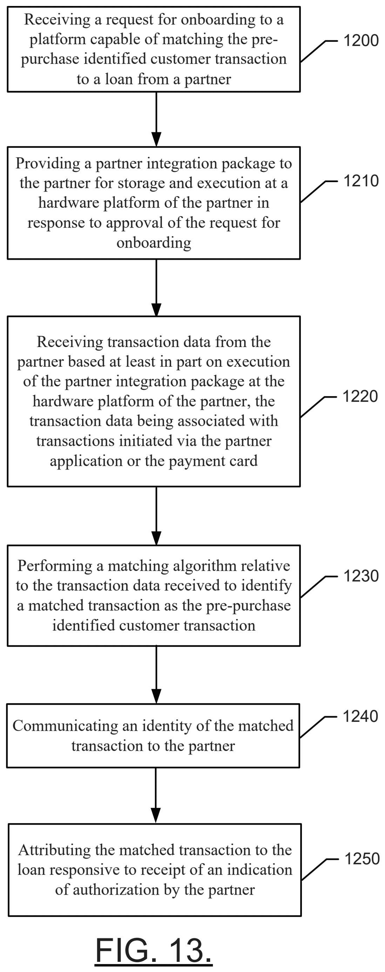

From a technical perspective, the SFP platform 10, and more particularly the facilitation agent 44, described above may be used to support some or all of the operations described above. As such, the apparatus described in FIG. 2 may be used to facilitate the implementation of several computer program and/or network communication based interactions. As an example, FIG. 8 (and FIG. 13, which follows below) is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of processing a customer transaction according to one embodiment of the invention is shown in FIG. 8. The method may include receiving an estimated purchase amount and merchant identity information defining a future purchase from a customer at operation 700 and providing loan terms associated with one or more financing options corresponding to the defined future purchase at operation 710. The method may further include, responsive to the customer agreeing to terms on a selected financing option, storing the financing option in association with the estimated purchase amount and the merchant identity information at operation 720 and, responsive to receiving an indication of a transaction between the customer and a merchant, determining whether the transaction maps to the defined future purchase at operation 730. The method may also include initiating, by a facilitator, a debit transaction and originating a loan to the customer to finance the transaction in accordance with the selected financing option in response to the transaction mapping to the defined future purchase for the customer to repay the facilitator at operation 740.

In an example embodiment, an apparatus for performing the method of FIG. 8 above may comprise a processor (e.g., the processor 102) or processing circuitry configured to perform some or each of the operations (700-740) described above. The processor may, for example, be configured to perform the operations (700-740) by performing hardware implemented logical functions, executing stored instructions, or executing algorithms for performing each of the operations. In some embodiments, the processor or processing circuitry may be further configured for additional operations or optional modifications to operations 700 to 740.

In simple terms, the operations described above provide a means by which to conduct "loan matching" in order to map a pre-approved loan to a later transaction in an unambiguous and seamless way from the perspective of the customer. The operations described above in connection with FIGS. 3-8 generally assume activity of the customer on a device (e.g., the client 20) executing an application (e.g., client application 22) or using a payment card (e.g., debit card) that is associated with the facilitator (e.g., facilitation agent 44), and therefore assumes that the facilitator has a direct and primary relationship with the customer. Thus further assumes that the facilitator has all the necessary information to conduct the loan matching and drive flow of funds as well as communication and repayment with the customer. However, there are multitudes of transactions that are or may be conducted from applications or using payment cards that are not associated with the facilitator, but instead are associated with potential partners of the facilitator. The structures and methods described above may therefore be seen as a naive, one-size-fits-all approach that lacks contextual awareness of both customers and merchants, and that renders the scope of the benefits available through the technology limited.

Accordingly, it may be desirable to convert the SFP platform 10 described above into a smart platform that can actually extend to customers regardless of merchant and consumer context and enable dynamic, context aware messaging and interactions that can lead to higher engagement with customers and merchants, and also lead to higher conversion rates. However, enabling such a smart platform requires further technical tools to be employed that overcome some of the problems that would otherwise exist to inhibit the flexibility needed to instantiate the smart platform.

In this regard, for example, data duplication is a significant problem when extending platform reach. Databases, tables, data sets, etc., that are associated with merchants and customers, which may be in the hundreds of millions of rows for the facilitator, would create massive storage loads if shared with partners involving overlapping merchants or customers. The inefficient storage and data management issued created could therefore be crippling. Moreover, when data is not normalized within this context, inefficient querying, difficulty in updating fields, and yet further increases in storage requirements result. Platform flexibility for updating when new message identifiers are needed or desired is also an issue, and can introduce risks when backfilling is performed. The monolithic nature of the platform may also hinder development speed, and bottlenecks and latency in the system may be experienced which hinders the efficacy of the system as well as degrading the user experience. Example embodiments may address all of these issues through technical means, and thereby enable partners of the facilitator to implement the loan matching technology, while also streamlining overall platform performance to deliver dynamic, context-aware messaging. Effectively, the facilitator may thereby be opened up to participating in many more wallets and transactions including transactions conducted from partner applications and/or with partner payment cards. To achieve this, not only may the facilitator modify the structures described above in connection with FIGS. 3-8, but the facilitator may also provide data models that employ normalized data and rule based filtering to allow easy introduction of new massaging identifiers. The new data models may also structure common data to avoid duplication to make it easier to perform bulk updates and compliance audits. Partners will further be enabled to interact with the facilitator using the new models, normalized and de-duplicated data, with flexible and context aware messaging based on the provision of a partner integration package that includes code executable at the hardware of the partner to configure partner message flow to integrate the facilitator, and specifically the loan matching capability provided by the facilitator, into transaction flows and processing.

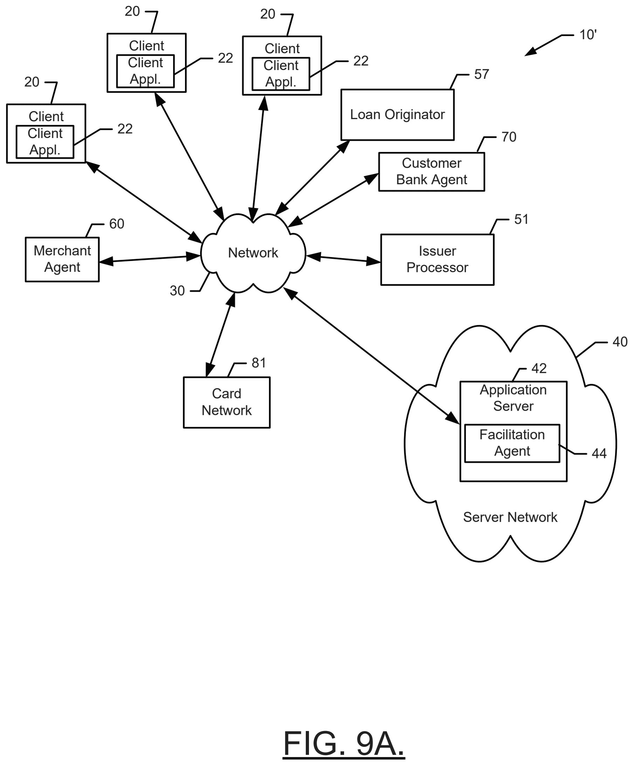

In some cases, the architecture of FIG. 1 may be modified in connection with certain flows and processing paradigms for an alternative construct. FIG. 9A illustrates a modified diagram of the environment of FIG. 1 in which provision of content and information associated with the financial industry (e.g., including at least some data provided to/from customers and/or merchants in real-time) may be accomplished by a particular entity (namely the facilitation agent 44 residing at the application server 42). Thus, the facilitation agent 44 and other similarly numbered components may be similar to the respective same components discussed above in connection with FIG. 1.

The SFP platform 10' may also operate in cooperation with the merchant agent 60 and the customer bank agent 70, but the issuing bank may be replaced by a loan originator 57, the authentication agent may be replaced by an issuer processor 51 (e.g., issuing processor) and a card network 81 may also be included. The facilitation agent 44 may be configured to interact with, or otherwise facilitate interactions between each of the issuer processor 51, the loan originator 57, the merchant agent 60, the customer bank agent 70, and the card network 81 in order to carry out example embodiments as described herein. Thus, each of the issuer processor 51, the loan originator 57, the merchant agent 60, the customer bank agent 70, and the card network 81 should be understood to be a computer, server, smart phone, or other technical component or module associated with a respective party (e.g., a processor , loan originator, a merchant, a customer bank, and a card network operator, respectively) that is capable of communication with other parties via the network 30, and under control of or responsive to facilitating communication by the facilitation agent 44.

The issuer processor 51 may be an agent of a customer bank agent 70 or financial service provider capable of granting the facilitation agent 44 access to the customer bank to view account balances and credentials. The balances and credentials may be used or relied upon to pull or push funds from or to the customer bank. Thus, for example, the issuer processor 51 may utilize its own software, application programming interfaces (APIs) or the like that define an infrastructure or intermediary platform to connect a customer's bank account with the facilitation agent 44. The facilitation agent 44 may enable messages to show when a particular product (e.g., loan) is available, and then the APIs may be used to connect the customer to the facilitation agent 44 to access the product.

The customer bank may be a bank at which the customer (i.e., associated with one of the clients 20) deposits money in a bank account such as a savings account or a checking account and has an associated payment card (e.g., debit card). In an example embodiment, the customer, via the customer bank, may subscribe or register to a service from the facilitation agent 44 to enroll the customer as a member of the SFP platform 10. The customer may, by registering or subscribing to the services of the facilitation agent 44, further authorize the facilitation agent 44 to conduct specific activities related to the customer bank account when corresponding conditions are met, which may be facilitated by the issuer processor 51. The activities may include checking account status (i.e., checking a current balance of funds deposited in the customer account) and/or authorizing withdrawal of funds from the customer account in order to settle a transaction or make payments to the facilitation agent 44. In some cases, the activities may also include underwriting. In this regard, for example, the facilitation agent 44 may use information obtained regarding cash flow in connection with cash flow underwriting.

The card network 81 may be an agent or service that enables or facilitates processing card transactions. Thus, for example, the card network 81 may utilize its own software, application programming interfaces (APIs) or the like that define an infrastructure to connect businesses or companies to manage and processor their payment card transactions.

The customer bank agent 70 may change for each respective one of the clients 20 (and therefore for each respective customer). Similarly, the merchant agent 60 may change for each respective transaction since different merchants may be involved in different transactions involving the clients 20. The facilitation agent 44 could use different processors or card networks. In some cases, the facilitation agent 44 may use different processors 50 in order to ensure multiple distinct customers' banks can be accommodated. Accordingly, the facilitation agent 44 is configured to work with multiple card networks 81 and issuer processors 51. As noted above, the SFP platform 10' may operate to enable the customer associated with a given one of the clients 20 to make a purchase in real time from a merchant associated with the merchant agent 60. In some example embodiments, the client application 22 may be used in connection with setting up the account details that are then used as the basis for managing interactions between the parties shown in FIG. 9A under control of the facilitation agent 44. In this regard, for example, the client application 22 may be used to engage (e.g., via a website and corresponding APIs) with the facilitation agent 44 to set up an account with the facilitation agent 44 for services associated with the SFP platform 10'. The processor via the customer bank may share account details associated with the customer bank agent 70 and may provide terms and conditions (electronically or via mail or other communication means) that the customer may accept to establish a user profile and user account with the facilitation agent 44. Thus, it should be appreciated that the client application 22 could be used to set up the user account and user profile.

During establishment of the user account, the customer (or processor on behalf of the customer) may also authorize the facilitation agent 44 to make real time (or anytime) checks on account status (e.g., account balance) or to make periodic routine checks of the same. Thus, for example, for each transaction, the facilitation agent 44 may be enabled to check the account balance or historic transactions of the customer. Alternatively or additionally, the facilitation agent 44 may make routine checks or snapshot looks at the account balance. For example, a check may be made every day at a certain time, every two or three days, or at other standard or random intervals. The account status of the customer bank may be used by the facilitation agent 44 in facilitating payment transactions, and deferred decision making as to how to settle such transactions as described in greater detail below.

The loan originator 57 may have an agreement or relationship with the entity associated with the facilitation agent 44 that enables the facilitation agent 44 to extend funds to a merchant or vendor on behalf of the customer in response to instruction from the facilitation agent. The facilitation agent 44 may therefore coordinate communications and funds transferring between members or parties of the SFP platform 10 to facilitate payment transactions that can be handled in ways selected specifically by the customer. In this regard, the customer may approach the merchant (physically or virtually) in order to initiate a transaction. The card associated with the customer bank account may be provided for payment, and the corresponding indication of a pending transaction may be communicated via the card network 81 to the processor which communicates the transaction to the facilitation agent 44. The transaction may be mapped, via the facilitation agent 44, to a previously planned purchase for which a loan is approved and flow of funds reserved for the loan may be managed without any further need for customer interaction. Alternatively or additionally, the transaction may be mapped, again via the facilitation agent 44, to a prior purchase to which an approved loan can be linked such that flow of funds reserved for the loan can be handled, again without any further need for customer interaction. The communication and activities that ensue from the basic descriptions above will now be described greater detail below.

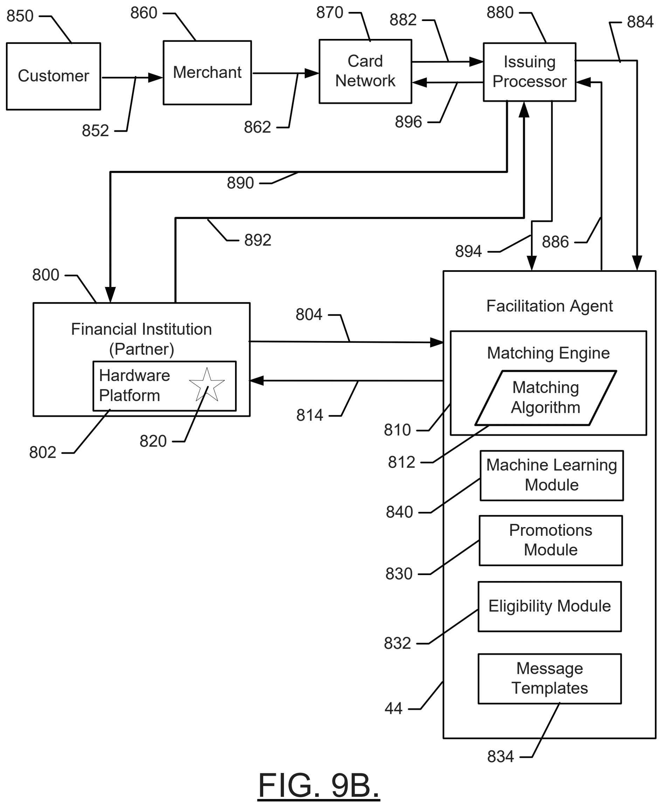

Regardless of how the transactions are initiated, the SFP platform 10' may be used before, during and after the time of the transaction in order to enable the facilitation agent 44 to set up the user account, make determinations necessary to approve a loan in association with a planned transaction prior to its initiation, or a prior transaction after initiation, conduct the transaction in real time responsive to initiation of the transaction, facilitate flow of funds and issuance of the loan responsive to mapping the transaction to the planned transaction or prior purchase and corresponding loan, and managing the flow of funds accordingly at the appropriate time. Each of these activities may have its own respective timing and communications that are facilitated by the facilitation agent 44 and FIGS. 9B-15 illustrate example control flows associated with various scenarios.

FIG. 9B illustrates a block diagram of a system that integrates a partner (e.g., an issuer processor 51 and their related bank relationships (e.g., customer bank)) of the facilitator into the process otherwise described above in reference to FIGS. 3-8. In this regard, the operations associated with the description of FIG. 8 may generally be understood to define a process for determining whether a transaction can be mapped (and therefore matched) to a pre-purchase loan. Thus, the method defined in FIG. 8 may be considered to provide a matching algorithm, which may be performed by the facilitator (e.g., via facilitation agent 44). Accordingly, for purposes of simplification, FIG. 9B shows the facilitation agent 44 including a matching engine 810, which may execute a matching algorithm 812, for example, via the hardware shown in FIG. 2 when called. However, in order to integrate the partner (e.g., issuer processor 51), specific content (e.g., code and instructions to configure a hardware platform 802 of the partner accordingly) must be provided to the partner ahead of time.

As shown in FIG. 9B, the partner may initially provide an onboarding request 804 to the facilitation agent 44 (or receive one therefrom). In some cases, the onboarding request 804 may be provided responsive to an invitation (not shown), which may be provided by the facilitation agent 44. However, the onboarding request 804 could also be unsolicited. Regardless of motivation, when the onboarding request 804 is received at the facilitation agent 44, a determination to onboard the partner may be made, and result in the provision of an onboarding message 814 being sent to the partner. The onboarding message 814 may provide content to the hardware platform 802 of the partner for storage and execution when appropriate. In an example embodiment, the onboarding message may include a partner integration package 820 as described herein.

The hardware platform 802 of the financial institution 800 may include an instance of processing circuitry that is similar in form and/or functional capability to the corresponding processing circuitry 100 of FIG. 2. Thus, the hardware platform 802 may be, for example, a computer or server that executes various functional computer codes in order to communicate with other devices to interact with those devices to handle transactions. However, in this case, the hardware platform 802 may further require pre-configuration in order to enable such communication and interaction.

In an example embodiment, the partner integration package 820 may be provided by the facilitation agent 44 to include executable code that is stored in the processing circuitry of the hardware platform 802 of the financial institution 800, and called via API or other process calls in order to support interaction with the facilitation agent 44 as described herein for cooperation with respect to potential loan matching and handling of loans that match. In some examples, the partner integration package 820 may include executable code that defines specific functional capabilities with respect to the integration with the facilitation agent 44. For example, the partner integration package 820 may include a promotional integration package that is provided by a promotions module 830 of the facilitation agent 44. The promotional integration package may include or define executable code for displaying a selected promotion at a client device of the customer (e.g., client 20 of FIG. 1) responsive to the customer accessing a web application of the partner. Thus, for example, the customer may (via client 20) be on the web application of the partner reviewing purchases made with one or more merchants via respective transactions conducted with a payment card associated with the bank agent (and not with the facilitator). Via the integration with the facilitation agent 44 by virtue of the partner integration package 820 (and more specifically the promotional integration package thereof), the customer may be alerted or informed of the opportunity to finance a transaction that is subject to a promotion being run by the facilitator. In some cases, the issuer processor 51 (e.g., acting as partner) may therefore facilitate a relationship between the customer bank and the facilitation agent 44. Thus, in essence, the issuer processor 51 may be a middle man between the customer bank or card issuer and the facilitator.

The promotions module 830 may be configured (e.g., via configuration of the processing circuitry 100 of FIG. 2), to define promotions corresponding to merchants, financial institutions, products and/or the like, and store promotional materials in memory (e.g., memory 104) for distribution or modification. During distribution, promotional content may be included in the promotional integration package provided to the customer bank via the partner through the partner integration package 820. The promotions module 830 may, for example, store a plurality of different promotions and, for example, select promotions that are deemed to be most relevant to a customer, a merchant at which the customer is shopping or has shopped, a partner, specific third parties or their products, temporal considerations (e.g., time of year, holiday, time of day, etc.). The promotions may be defined, tested, selected or otherwise modified and distributed based on machine learning, as described in greater detail below. Thus, for example, machine learning may be employed to determine selected promotional materials (e.g., associated with a selected promotion) for distribution to the hardware platform 802 of the financial institution 800. In some cases, the promotional materials may also or alternatively be configured to be time based depending on the needs of various partners. Thus, for example, machine learning may not be the only way to select promotional materials.

In an example embodiment, the partner integration package 820 may also or alternatively include executable code to enable the partner to understand and in some case also apply eligibility logic of the facilitator to appreciate when certain transactions are likely to be eligible for matching to a pre-purchase loan and subsequently being financed by funds proceeding from the pre-purchase loan from the facilitator. This executable code may be included in an eligibility logic package that may form a portion of the partner integration package 820. The eligibility logic package may be produced or maintained by the facilitator at an eligibility module 832 instantiated via the processing circuitry 100 at the facilitation agent 44 prior to provision of the eligibility logic package to the hardware platform 802.

In some cases, the eligibility logic package may include executable code that, when executed at the hardware platform 802 of the partner, includes an indication of purchasing power of the customer as determined by the facilitator. As an alternative, the eligibility logic package may direct the customer to the facilitation agent 44 for interactions that may include provision of the indication. The indication of the customer's purchasing power may inform the partner regarding a likelihood that the facilitator will ultimately approve the loan, assuming the loan is matched as a pre-purchase loan worked out between the customer and the facilitator ahead of time, but with the transaction being conducted not with a payment card of the facilitator and instead with a payment card of the partner. The eligibility logic package may also, or alternatively, include eligibility rules of the facilitator for a split option that, when approved, enables the customer to make split payments to repay the loan to the facilitator. The eligibility logic package may also include a call to a promotion option (e.g., from the promotions module 830) defining display contents for display at a customer device (e.g., the client 20) corresponding to the split option.

Communication between the partner and the facilitator may need to be conducted in accordance with a mutually understandable lexicon of messages. The messages may therefore need to be formatted in a particular way so that data can be understood in the same context between the two discrete hardware platforms of the facilitator and the partner. To provide a common lexicon, and furthermore to enable that common lexicon to be updated periodically when desired or needed, message templates 834 may also be shared by the facilitator with the partner via the partner integration package 820. Thus, for example, the partner integration package 820 may include a message identifier template from the message templates 834. The message identifier template may define a plurality of message identifiers used to communicate between the partner and the facilitator. The message identifier template may, in some cases, define specific context information that applies or associates certain messages and/or formats to specific situations, thereby creating a context awareness due to the indication of the specific situation, which can be inferred when the corresponding message identifiers are used. Some specific situations covered may include user purchasing power (as determined by the facilitator), incentives being offered, cart size, segment applicability for merchants, customers, and/or the like.

As noted above, the message identifier template, the promotional contents of the promotional integration package, and/or the eligibility rules of the eligibility logic package may be updated and modified periodically. Original formulation, updates and modifications may, in some cases, be conducted under control of a machine learning module 840, which may employ machine learning to facilitate computationally efficient operation in a high data velocity and volume environment. Thus, for example, the machine learning module may provide new message identifiers or update old message identifiers to normalize data between the partner and the facilitator via the message identifier template. As another example, the machine learning module may be configured to determine the selected promotion for selection responsive to the application of optimization algorithms executed at the machine learning module 840. Thus, for example, the machine learning module 840 may be configured to optimize promotional materials, eligibility logic and/or messaging based on profile information of the customer, a merchant with which the customer engages in a transaction, or the partner.

The machine learning module 840 may employ one or more instances of a neural network (e.g., a CNN), a support vector machine (SVM), Bayesian network, logistic regression, logistic classification, decision tree, ensemble classifier or other machine learning model to process inputs received by the machine learning module 840 to generate outputs as described herein. The machine learning module 840 may be supervised (identifying patterns in raw data upon which inference processes are desired to be performed via training examples) or unsupervised (identifying patterns in raw data upon which inference processes are desired to be performed without training examples). In an example embodiment, the machine learning module 840 may include a neural network of nodes where each node includes input values, a set of weights, and an activation function. The neural network node may calculate the activation function on the input values to produce an output value. The activation function may be a nonlinear function computed on the weighted sum of the input values plus an optional constant. Neural network nodes may be connected to each other such that the output of one node is the input of another node. Moreover, neural network nodes may be organized into layers, each layer comprising one or more nodes. The neural network may be trained and update its internal parameters via backpropagation during training. A CNN may be a type of neural network that further adds one or more convolutional filters (e.g., kernels) that operate on the outputs of the preceding neural network layer to produce and output to then next layer. The convolutional filters may have a window in which they operate, which is spatially local. A node of a preceding layer may be connected to a node in the current layer if the node of the preceding layer is within the window. If not within the window, then the nodes are not connected.

In an example embodiment, training may occur via the provision of training data along with target data that includes desired output data associated achieved from the training data via respective models stored in the memory 104 and accessible to the machine learning module 840. Thereafter, when inferences are to be drawn with respect to a new set of data including new information to provide an output that is indicative of options for output, training backpropagation may be provided to update the learning. The information provided to the machine learning module 840, and the corresponding outputs to be gained therefrom, may vary. Thus, for example, the machine learning module 840 may, in some cases, be employed by the facilitation agent 44 to enhance promotion content generation to maximize likelihood of positive interaction of the promotions with customers. In such cases, for example, massive amounts of real time account activity across a multitude of customer and merchant activities may be simultaneously monitored. Specific potential instances of positive interactions from both an acceptance rate perspective and profitability or other factors may be detectable in real time, whereas others may only be detectable by monitoring patterns that play out over longer periods of time. The machine learning module 840 may assist in load balancing between real time efforts to attract an individual customer with targeted content and post hoc efforts to improve overall profitability or other motivations. As such, the load balancing function may effectively triage massive amounts of data into respective camps that dictate how quickly corresponding resources are to be employed for system improvement.

All of the determinations and communications above, associated with provision of the partner integration package 820, may be conducted prior to (and as enabling precursors for) processing a customer initiated transaction to which the matching algorithm 812 of FIG. 8 may be applied. However, it should also be noted that the partner integration package 820 may be updated from time to time, if desired by the facilitator, or if determined to be advantageous by the machine learning module 840. However, once instantiated at the hardware platform 802, the facilitator and the partner may be technologically aligned and configured to permit cooperative handling of transactions that may be matched to pre-purchase loans as described herein. A description of such cooperative handling will now further be described in general terms in connection with FIG. 9B.

In this regard, for example, a customer 850 may present a payment card 852 to a merchant 860. The payment card 852 may be virtual or physical so the transaction being attempted could be an online or on-premises (card present) transaction. The merchant 860 may create an authorization 862 for the transaction via a card network 870. The card network 870 may be a financial services network of a payment card services corporation that interacts with the partner or issuing processor 880 and a card issuing bank) to determine whether to approve the authorization 862 and thereby also approve the transaction for funding. The issuing processor 880 may also be referred to as an authorization handler, and may receive an indication 882 of the authorization that is initiated by the card network 870. In an example embodiment, the facilitator may also have a pre-existing relationship with the issuing processor 880 (and corresponding code may be installed at the issuing processor 880 to facilitate exchange of information between the facilitation agent 44 and the issuing processor 880) to enable communications that effectively inform the facilitator of transactions being handled by the issuing processor 880 that may correspond to pre-purchase loans approved by the facilitator. Thus, responsive to the indication 882, the issuing processor 880 may send a transaction notification 884 to the facilitation agent 44. The facilitation agent 44 may run the matching algorithm 812 to determine whether the transaction associated with the authorization 862 has a matching loan. If matched, the facilitation agent 44 may then provide an identity of the matched transaction (and/or loan) to the issuing processor 880 via match determination message 886. The match determination message 886 may, in addition to communicating the identity of the matched transaction, further provide advisory information or a decision request (e.g., an indication that a decision on authorization is requested from the partner) based on an authorization decision made by the partner using eligibility rules provided by the partner integration package 820.

The issuing processor 880 may provide an authorization message 890 to the hardware platform 802 of the partner. The authorization message 890 may include authorization information for the transaction along with an indication of a matched transaction (e.g., via the identity of the matched transaction) and either the advisory information or decision information from the facilitator. The partner may then reply with a decision message 892, which may include a decision on whether authorization should be approved and an indication of whether the transaction should be attributed to the loan that matched based on the identity of the matched transaction of the match determination message 886.

In an example embodiment, the advisory information may include or be accompanied by an indication that a decision on authorization is requested from the partner based on an authorization decision made by the partner using information provided by the partner integration package 820. In this regard, for example, the decision on authorization may provide the indication of authorization by the partner to the facilitator, and the advisory information may indicate that the facilitator is capable of attributing the matched transaction to the loan. The decision information may include or be accompanied by an indication that a decision on authorization is requested from the partner based on an authorization decision made by the partner using information provided by the partner integration package 820. In this regard, for example, the decision on authorization may provide the indication of authorization by the partner to the facilitator, and the decision information may indicate that the facilitator necessarily will attribute the matched transaction to the loan.

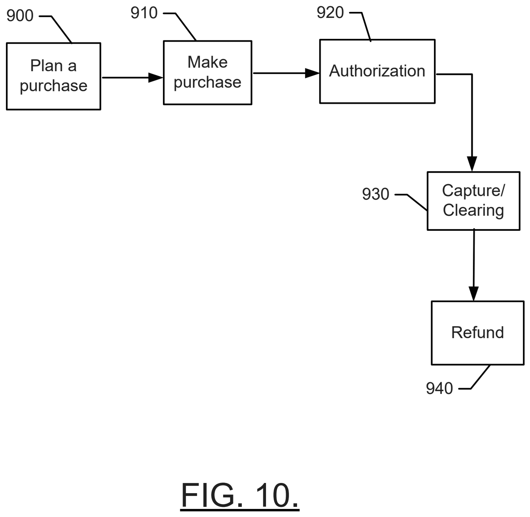

FIG. 10 illustrates a high level block diagram of purchase flow in accordance with an example embodiment. At operation 900, the customer may use the client 20 in order to plan a purchase at operation 900. The planning of the purchase may be accomplished via a web application (e.g., client application 22) accessing account information with the facilitator in order to enable the facilitator to determine to that the customer can be approved for a loan with respect to a particular purchase (e.g., good or service) identified by the customer. As an example, the customer may create a pre-purchase loan with the facilitator for $1000 with merchant A. Whereas matching a loan to a purchase when the purchase is made using a payment card of the facilitator may be possible using the matching algorithm 812 in a unilateral way, the process is complicated substantially if a payment card of a third party (e.g., the financial institution 800) is used. The additional structure, code sharing, and communication of FIG. 9B may nevertheless overcome that complication.

Thus, for example, when a transaction is conducted later on as the customer makes a purchase at operation 910 using a payment card of the partner, the discussion and actions outlined in FIG. 9B above may be initiated. Although not required, in some cases, an initial threshold question may be whether the purchase being made happens within a predetermined time period of the planning of the purchase. For example, a selected number of days, weeks or months may define a limit for the time period over which matching can or will be performed. Furthermore, the purchase made at operation 910 may be with merchant A, and be for an amount that is within a predetermined limit of the amount approved for the pre-purchase loan. In this example, assume the purchase was at merchant A and for $980 made within 24 hours of planning the purchase and agreeing to terms on the pre-purchase loan.

After the purchase at operation 910, and typically within a business day or so, authorization step 920 may follow. Following the example, merchant A may create an authorization for $980 corresponding to the purchase. The issuing processor 880 may inform the facilitator of the transaction as part of the authorization step 920 (as described above), and the facilitator may use the matching algorithm 812 to determine a matching loan to the transaction (thereby determining that the transaction is a matching transaction). The facilitator may also provide the advisory information or decision information discussed above along with an identification of the match. The financial institution 800 may, as part of the authorization step 920, make a decision on authorization and also determine whether to apply the loan (i.e., the pre-purchase loan) to the transaction. The customer may see $980 authorized in a list of transactions associated with the payment card (e.g., via a web application of the financial institution 800). In some cases, a note indicating that the transaction will be attributed to the pre-purchase loan may also be included, so that the lack of impact on the balance of the customer with the financial institution 800 is explained. In this regard, the transaction will not add to the balance of the customer with the financial institution 800 since the funds for the transaction will come from the facilitator for the pre-purchase loan. The customer may also receive notification from the facilitator that the loan has been issued, and payment schedule information may follow.

Thereafter, within a predetermined time of the purchase being made at operation 910, a capture/clearing operation 930 may occur asynchronously. In this step, the merchant may capture $980 from the original authorization, and the capture information may be provided by the issuing processor 880 to the facilitator. The facilitator may indicate that the transaction is associated with a pre-purchase loan and adjust the loan from $1000 to $980. The issuing processor 880 may inform the financial institution 800 that the facilitator has handled the capture. The customer may see the $980 purchase from merchant A as a clearing event, and a $980 credit from the facilitator. The facilitator may originate the loan at the point, and the previously agreed upon terms including the repayment plan may begin, and the customer may receive an email or other notification from the facilitator. The facilitator may then disburse $980 to the issuing processor 880.

To the extent a refund 940 is initiated with respect to the purchase, merchant A may issue a $980 refund to the issuing processor 880, which may inform the facilitator. The facilitator may then provide advice as to whether the refund is related to a loan and whether the refund can be applied to the loan. The issuing processor 880 may then pass that information on to the financial institution 800, and the financial institution 800 may process the refund to apply the funds to the loan. The refund may then be applied to the loan and repayment associated with the payment plan may be adjusted accordingly. The customer may see $980 refund from merchant A, and a corresponding debit to the facilitator. The issuing processor 880 may then disburse $980 to the facilitator.

Of note, the description above relates to a single capture paradigm, but a multi-capture transaction may also be supported. For example, roughly the same process may be employed for a combined purchase involving multiple items that may ship separately. Capture and clearing may happen when each item ships instead of all at once. Example embodiments may also apply to separate authorizations for each item. Thus, for example, if a separate authorization is employed each time one of the items is ready to ship, the flow described above may still apply except as modified to support separate authorizations associated with each item being shipped.

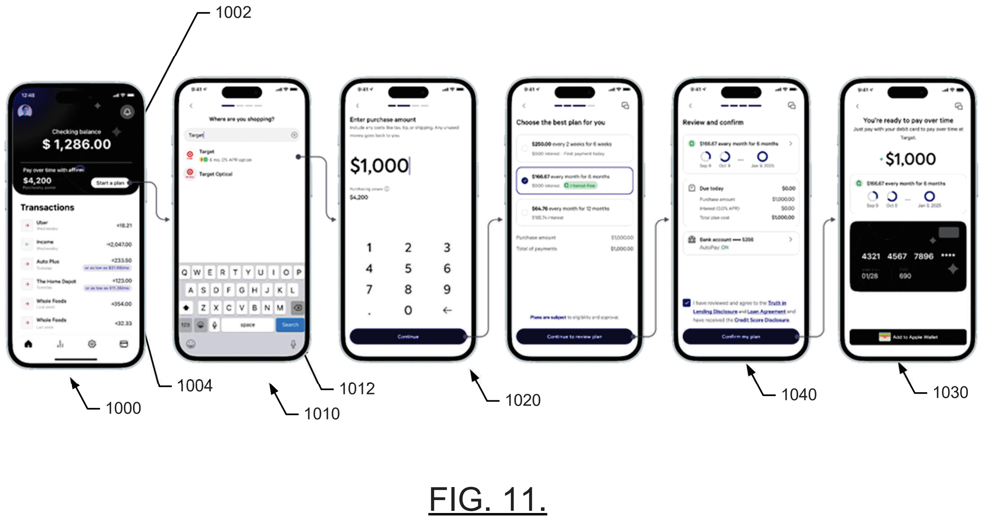

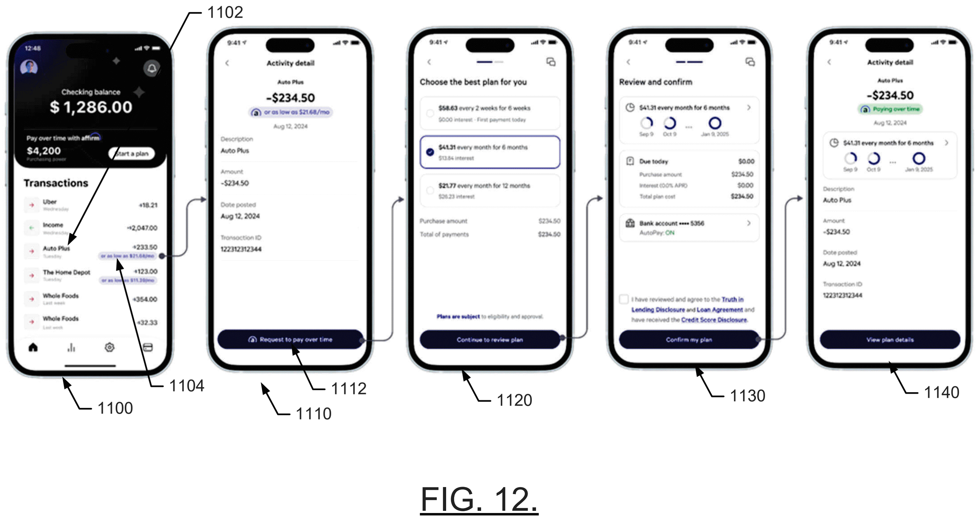

Although identification of a pre-purchase loan may, in some cases, occur via a web application hosted at the facilitator, the provision of the partner integration package 820 may enable the customer to establish a pre-purchase loan arrangement with the facilitator via a web application of the partner. FIG. 11 illustrates a series of interface screens that may be presented to the customer (e.g., at client 20) in association with pre-purchase flow in a web application of the partner. The pre-purchase flow may begin from an account screen 1000 of the web application of the partner, and may involve selection of an option 1002 to define a pre-purchase loan. Once the option 1002 has been selected, the customer may be presented with screen 1010, which enables merchant identification. Thereafter, screen 1020 may enable the customer to select a loan amount. Plan option selection screen 1030 may provide a list of available plans (e.g., based on the eligibility logic package of the partner integration package 820). The customer may select a plan and then review details on the review screen 1040. Finally, on confirmation screen 1050, the customer may effectively link the loan to the payment card in the wallet of the customer. However, example embodiments need not be limited to pre-purchase loan embodiments, and may also be practiced in connection with post purchase processing, as discussed below in reference to FIG. 12.

FIG. 12 illustrates a series of interface screens that may be presented to the customer (e.g., at client 20) in association with post purchase flow in a web application of the partner. The post purchase flow may involve the interaction of the financial institution 800 (or partner) with the facilitation agent 44 (or facilitator) after a transaction has already been processed normally using the payment card of the partner. In this regard, screen 1100 shows a list of transactions of which a selected transaction 1102 may have a promotion indication 1104 associated with it. The promotion indication 1104 may be made possible by the facilitator itself or may be determined by the partner using the information provided in the partner integration package 820. For example, the promotion indication 1104 may be selected based on information provided by the partner regarding recent transactions involving the payment card of the partner that do not match, but are nevertheless (based on the eligibility logic package) eligible for issuing a loan by the facilitator.

To the extent the customer is interested in taking one of the transactions in the transaction list and converting it to a loan (albeit in this example not a pre-purchase or matched loan), the customer may select the transaction making it the selected transaction 1102. Thereafter, in screen 1110, activity detail is presented regarding the selected transaction 1102. The customer may select a loan request option 1112 to be presented with a list of qualified offers in screen 1020. The customer may select a qualified offer, and then be provided with a review and confirmation screen 1130. If confirmed, the customer may see screen 1140, which may enable further transaction review. Thus, the customer may use the facilitator to cover a purchase made with the payment card of the partner either pre-purchase (via the matching algorithm 812 and processes described in connection with FIG. 9B and the flow shown in FIG. 11), or via post purchase conversion, as described in reference to FIG. 12.

Accordingly, some example embodiments may provide a method of providing partner integration into processing a facilitator granted, loan backed, pre-purchase identified customer transaction initiated via a partner application or payment card is shown in FIG. 13. The method may include receiving, at the facilitator, a request for onboarding to a platform capable of matching the pre-purchase identified customer transaction to a loan from a partner at operation 1200, providing, by the facilitator, a partner integration package to the partner for storage and execution at a hardware platform of the partner in response to approval of the request for onboarding at operation 1210, and receiving, by the facilitator, transaction data from the partner based at least in part on execution of the partner integration package at the hardware platform of the partner at operation 1220. The method may further include performing, by the facilitator, a matching algorithm relative to the transaction data received to identify a matched transaction as the pre-purchase identified customer transaction at operation 1230, communicating, by facilitator, an identity of the matched transaction to the partner at operation 1240, and attributing, at the facilitator, the matched transaction to the loan responsive to receipt of an indication of authorization by the partner at operation 1250. The transaction data may be associated with transactions initiated via the partner application or the payment card.

In an example embodiment, an apparatus for performing the method of FIG. 13 above may comprise a processor (e.g., the processor 102) or processing circuitry configured to perform some or each of the operations (1200-1250) described above. The processor may, for example, be configured to perform the operations (1200-1250) by performing hardware implemented logical functions, executing stored instructions, or executing algorithms for performing each of the operations. In some embodiments, the processor or processing circuitry may be further configured for additional operations or optional modifications to operations 1200 to 1250.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the matching algorithm may include receiving an estimated purchase amount and merchant identity information defining a future purchase from the customer, providing loan terms associated with one or more financing options corresponding to the defined future purchase, and responsive to the customer agreeing to terms on a selected financing option, storing the financing option in association with the estimated purchase amount and the merchant identity information. The matching algorithm may further include, responsive to receiving an indication of a transaction between the customer and a merchant, determining whether the transaction maps to the defined future purchase, and originating a loan to finance the transaction in accordance with the selected financing option in response to the transaction mapping to the defined future purchase. In an example embodiment, communicating the identity of the matched transaction may include providing the identity of the matched transaction along with advisory information and an indication that a decision on authorization is requested from the partner based on an authorization decision made by the partner using information provided by the partner integration package. In this context, the decision on authorization may provide the indication of authorization by the partner to the facilitator, and the advisory information may indicate that the facilitator is capable of attributing the matched transaction to the loan. In some cases, communicating the identity of the matched transaction may include providing the identity of the matched transaction along with decision information and an indication that a decision on authorization is requested from the partner based on an authorization decision made by the partner using information provided by the partner integration package. In this context, the decision on authorization provides the indication of authorization by the partner to the facilitator, and the decision information indicates that the facilitator necessarily will attribute the matched transaction to the loan. In an example embodiment, providing the partner integration package may include providing a promotional integration package defining executable code for displaying a selected promotion at a client device of the customer responsive to the customer accessing a web application of the partner. In some cases, the selected promotion may be determined for selection responsive to operation of a machine learning module configured to optimize promotional materials based on profile information of the customer, a merchant with which the customer engages in a transaction, or the partner. In an example embodiment, providing the partner integration package may include providing an eligibility logic package, the eligibility logic package including executable code that, when executed at the hardware platform of the partner, includes an indication of purchasing power of the customer as determined by the facilitator to inform the partner regarding a likelihood that the facilitator will purchase the loan from the partner. In some cases, providing the partner integration package comprises providing an eligibility logic package, and the eligibility logic package further defines eligibility rules for a split option enabling the customer to make split payments to repay the loan to the facilitator, and includes a call to a promotion option defining display contents for display at a customer device corresponding to the split option. In an example embodiment, providing the partner integration package may include providing a message identifier template defining a plurality of message identifiers used to communicate between the partner and the facilitator. In some cases, the message identifier template may be updateable to provide new message identifiers or update old message identifiers to normalize data between the partner and the facilitator.

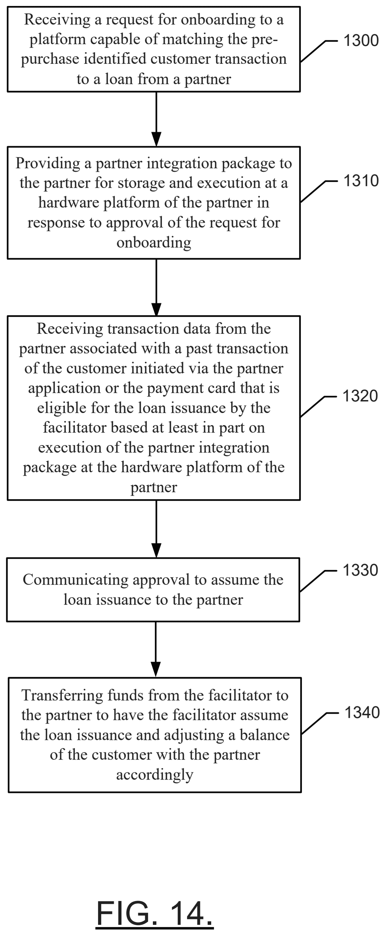

As noted above, example embodiments may also be performed for post purchase coordination that enables a transaction made with a partner payment card to be coordinated with a loan issued by a separate party (e.g., the facilitator). Thus, for example, FIG. 14 shows a method of enabling coordination of loan issuance via a facilitator for a customer transaction initiated via a partner application or payment card according to an example embodiment. The method may include receiving a request for onboarding to a platform capable of matching the pre-purchase identified customer transaction to a loan from a partner at operation 1300, and providing a partner integration package to the partner for storage and execution at a hardware platform of the partner in response to approval of the request for onboarding at operation 1310. The method may further include receiving transaction data from the partner associated with a past transaction of the customer initiated via the partner application or the payment card that is eligible for the loan issuance by the facilitator based at least in part on execution of the partner integration package at the hardware platform of the partner at operation 1320, communicating approval to assume the loan issuance to the partner at operation 1330, and transferring funds from the facilitator to the partner to have the facilitator assume the loan issuance and adjusting a balance of the customer with the partner accordingly at operation 1340.

The ability to define a future purchase that is described above may apply to either a physical card that is associated with the user account (e.g., a debit card, credit card, or other physical payment facilitating card), or to a virtual card that is associated with the user account. In any case, by providing technical means to not only identify a future purchase, but obtain financing specifically for that purchase can reserve funds and ensure that the purchase is conducted seamlessly when the time comes to actually carry out the previously planned purchase, customer convenience can be maximized. Thus, originating an installment loan to cover a planned transaction can occur without any transactional friction at the time of purchase. There is no waiting for loan approval, but instead the technical components work together to ensure that the prior agreed upon loan terms are married to the current transaction in a seamless way. But doing so relies upon the technical ability to ensure that the transaction being undertaken corresponds precisely to the previously identified future purchase, and example embodiments provide this technical ability. As noted above, the ability to match a pre-purchase loan to a transaction intended to cover it can be impossible to do when the payment card used is not affiliated with the party issuing the loan unless there is infrastructure in place to permit communication that enables such matching. Example embodiments provide the technical tools in the form of physical and logical infrastructure to permit that matching, but also enable the customer to use a third party (e.g., partner) web application in order to identify a loan either pre or post transaction to associate with the transaction.

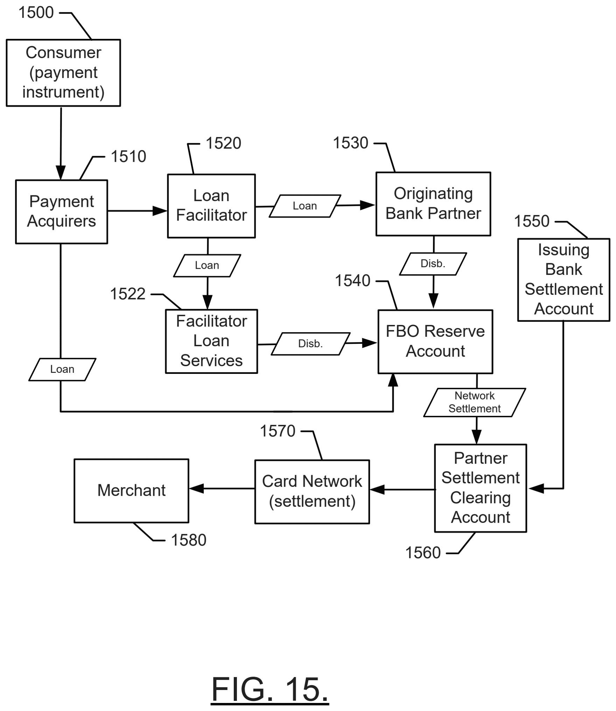

FIG. 15 illustrates a block diagram of a flow of funds in accordance with various example embodiments. In this regard, FIG. 15 illustrates a consumer 1500 (which may further represent a payment instrument (e.g., credit or debit card) of the consumer 1500. The consumer 1500 interacts with a payment acquirer 1510. The payment acquirer 1510 may be a payment processing and merchant acquiring division of a bank that offers merchants solutions for accepting credit and debit card payments via various methods. The payment acquirer 1510 may further interface with a loan facilitator 1520 (e.g., a bank or other lending entity), which may in turn have its own loan servicing department with a corresponding account (e.g., facilitator loan services account 1522). An originating bank partner 1530 may also participate, and a for benefit of (FBO) reserve account 1540 may be maintained by the bank or lending entity on behalf of the customer(s). An issuing bank settlement account 1550 may also be maintained, and may sometimes be segregated between debit and credit settlements. A partner/issue processor may maintain a partner settlement clearing account 1560, which may also be integrated into the flow of funds. The flow of funds may further involve a settlement activity (via a card network 1570) with a merchant 1580 (and more particularly a bank account of the merchant 1580).

In a first example, for single capture of a pre-purchase flow, the customer 1500 may take up a pre-purchase loan with the loan facilitator 1520, which may be matched to a purchase at the time of transaction. In an example in which the loan was for $100, and the transaction was $90, a match may be achieved (as discussed above) and the merchant 1580 may capture the $90 transaction. The partner (or issuer processor) may pass that transaction on to the loan facilitator 1520. The card network 1570 may settle with the partner for the $90 transaction, and the loan facilitator 1520 may initiate a $90 disbursement from the facilitator loan services account 1522 to the FBO reserve account 1540, and then on to the partner settlement clearing account 1560 (e.g., via wire). The partner may then initiate a $90 debit from the originating bank partner 1530 (e.g., acting as issuer) (from network settlement) and a $90 credit to the issuer (from loan reimbursement - a $0 net flow from issuer). The loan facilitator 1520 may then originate the $100 loan. At a later time (e.g., a business day later), the $90 disbursement from the facilitator loan services account 1522 may arrive in the partner settlement clearing account 1560. In another day or two, $100 loan proceeds may arrive in the FBO reserve account 1540. The loan may then be adjusted after, for example, a few weeks from $100 to $90, and a $10 credit may be sent from the FBO reserve account 1540 to either the loan facilitator 1520 or the originating bank partner 1530 (whichever one holds the loan).

In a second example, for multi-capture of a pre-purchase flow, the customer 1500 may take up a pre-purchase loan with the loan facilitator 1520, which may be matched to a purchase at the time of transaction. In an example in which the loan was for $100, and the transaction was $90, a match may be achieved (as discussed above) and the merchant 1580 may capture the $50 of the transaction. The card network 1570 may settle with the partner for the $50 transaction, and the loan facilitator 1520 may initiate a $50 disbursement from the facilitator loan services account 1522 to the FBO reserve account 1540, and then on to the partner settlement clearing account 1560 (e.g., via wire). The partner may then initiate a $50 debit from the originating bank partner 1530 (e.g., acting as issuer) (from network settlement) and a $50 credit to the issuer (from loan reimbursement - a $0 net flow from issuer). The loan facilitator 1520 may then originate the $100 loan. At a later time (e.g., a business day later), the $90 disbursement from the facilitator loan services account 1522 may arrive in the partner settlement clearing account 1560. In another day or two, $100 loan proceeds may arrive in the FBO reserve account 1540. The merchant 1580 may then capture the other $40 of the transaction, and the loan facilitator 1520 may initiate a $40 disbursement from the facilitator loan services account 1522 to the FBO reserve account 1540, and then on to the partner settlement clearing account 1560 (e.g., via wire). The partner may then initiate a $40 debit from the originating bank partner 1530 (e.g., acting as issuer) (from network settlement) and a $40 credit to the issuer (from loan reimbursement - a $0 net flow from issuer). The $40 disbursement from the loan facilitator loan services account 1522 may arrive at the partner settlement clearing account 1560. The loan may then be adjusted after, for example, a few weeks from $100 to $90, and a $10 credit may be sent from the FBO reserve account 1540 to either the loan facilitator 1520 or the originating bank partner 1530 (whichever one holds the loan).

In another example, for automatic finalization of a pre-purchase flow, the customer 1500 may take up a pre-purchase loan with the loan facilitator 1520, which may be matched to a purchase at the time of transaction. In an example in which the loan was for $100, and the transaction was $99, a match may be achieved (as discussed above) and the merchant 1580 may capture the $99 transaction. The partner may pass that transaction on to the loan facilitator 1520. The card network 1570 may settle with the partner for the $99 transaction, and the loan facilitator 1520 may initiate a $99 disbursement from the facilitator loan services account 1522 to the FBO reserve account 1540, and then on to the partner settlement clearing account 1560 (e.g., via wire). The partner may then initiate a $99 debit from the originating bank partner 1530 (e.g., acting as issuer) (from network settlement) and a $99 credit to the issuer (from loan reimbursement - a $0 net flow from issuer). The loan facilitator 1520 may then originate $99 loan since an auto-finalize threshold (e.g., 95%) may be set above which the loan is originated based on the transaction amount instead of the requested loan amount. At a later time (e.g., a business day later), the $99 disbursement from the facilitator loan services account 1522 may arrive in the partner settlement clearing account 1560. In another day or two, $99 loan proceeds may arrive in the FBO reserve account 1540.

In another example, for pre-clearing of a post-purchase flow, the customer 1500 may make a $90 purchase, and request a post-purchase loan for the transaction before the merchant 1580 captures the transaction. Thus, for example, the customer 1500 may request the post-purchase loan and have it approved prior to the merchant capturing the $90 transaction. The card network 1570 may settle with the partner for the $90 transaction, and the partner may inform the loan facilitator 1520 that a capture has come in for the transaction with an approved loan. The loan facilitator 1520 may initiate a $90 disbursement from the facilitator loan services account 1522 to the FBO reserve account 1540, and then on to the partner settlement clearing account 1560 (e.g., via wire). The partner may then initiate a $90 debit from the originating bank partner 1530 (e.g., acting as issuer) (from network settlement) and a $90 credit to the issuer (from loan reimbursement - a $0 net flow from issuer). The loan facilitator 1520 may then originate the $90 loan. At a later time (e.g., a business day later), the $90 disbursement from the facilitator loan services account 1522 may arrive in the partner settlement clearing account 1560. In another day or two, $90 loan proceeds may arrive in the FBO reserve account 1540.

In another example, for post-clearing of a post-purchase flow, the customer 1500 may make a $90 purchase, and request a post-purchase loan for the transaction after the merchant 1580 captures the transaction. The customer 1500 may or may not have already been debited for the purchase depending on when they requested the loan. Thus, for example, the customer 1500 may make a $90 purchase. The merchant 1580 may capture the $90 transaction. The card network 1570 may settle with the partner for the $90 transaction, and the partner may debit $90 from the originating bank partner 1530 (e.g., acting as issuer from network settlement). The issuer may debit $90 from the customer's bank account. The customer 1500 may then request a loan from the loan facilitator 1520 for the purchase and be approved. The loan facilitator 1520 may initiate a $90 disbursement from the facilitator loan services account 1522 to the FBO reserve account 1540, and then on to the partner settlement clearing account 1560 (e.g., via wire). The partner may then issue a $90 credit to the originating bank partner 1530 (e.g., acting as issuer). The issuing bank may then credit the customer 1500. The loan facilitator 1520 may then originate the $90 loan. At a later time (e.g., a business day later), the $90 disbursement from the facilitator loan services account 1522 may arrive in the partner settlement clearing account 1560. In another day or two, $90 loan proceeds may arrive in the FBO reserve account 1540.

For processing of a refund, the customer 1500 may return an item purchased using a loan (e.g., pre-purchase loan) from the loan facilitator 1520. The partner may receive a $90 refund from the card network 1570. The loan facilitator 1520 may signal that the refund matches the loan. Then the partner may credit $90 to the issuing bank (e.g., via the issuing bank settlement account 1550) from refund network settlement, and also debit $90 from the issuing bank because the refund matches the loan (a $0 net change for the issuer). The loan facilitator 1520 may net $90 out of the daily disbursement from the FBO reserve account 1540 to the partner. Finally, the loan facilitator 1520 may credit $90 back to the originating bank partner 1530, and apply the refund to the customer's loan balance.

For an overcapture scenario, the customer 1500 may take up a pre-purchase loan with the loan facilitator 1520, which may be matched to a purchase at the time of transaction. In an example in which the loan was for $100, where the authorization is for $90 and the transaction was $120 (e.g., including a tip at a restaurant), a match may be achieved (as discussed above) and the merchant 1580 may capture the $120 transaction. The card network 1570 may settle with the partner for the $120 transaction, and the loan facilitator 1520 may initiate a $100 disbursement from the facilitator loan services account 1522 to the FBO reserve account 1540, and then on to the partner settlement clearing account 1560 (e.g., via wire). The partner may then initiate a $120 debit from the originating bank partner 1530 (e.g., acting as issuer) (from network settlement) and a $100 credit to the issuer (from loan reimbursement - a $20 net outflow from issuer). The issuer may then debit $20 from the customer's bank account. The loan facilitator 1520 may then originate the $100 loan. At a later time (e.g., a business day later), the $100 disbursement from the facilitator loan services account 1522 may arrive in the partner settlement clearing account 1560. In another day or two, $100 loan proceeds may arrive in the FBO reserve account 1540. In some cases, a smart buffer may be employed for overcapture scenarios such that, for example, in the tipping scenario described above where the bill is $100 and the time raised the total charge to $120, an update to the loan may be processed to increase the loan amount from $100 to $120.

For a dispute and chargeback situation, the customer 1500 may submit a dispute for a $100 transaction that is associated with a loan. The issuer/ partner may inform the loan facilitator 1520 of the dispute. The FBO reserve account 1540 may credit $100 to the originating bank partner 1530. The customer 1500 may have loan repayment scheduling paused while the dispute is active. If the card network 1570 rules in favor of the customer 1500 in relation to the dispute, the card network 1570 may settle a $100 chargeback with the partner, and the partner may inform the loan facilitator 1520 of the event via a card processing integration. The loan facilitator 1520 may then net $100 out of the daily disbursement from the FBO reserve account 1540 to the partner.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of providing partner integration into processing a facilitator granted, loan backed, identified customer transaction initiated via a partner application or payment card, the method comprising:
receiving, at the facilitator, a request for onboarding to a platform capable of matching the identified customer transaction to a loan from a partner;
providing, by the facilitator, a partner integration package to the partner for storage and execution at a hardware platform of the partner in response to approval of the request for onboarding;
receiving, by the facilitator, transaction data from the partner based at least in part on execution of the partner integration package at the hardware platform of the partner, the transaction data being associated with transactions initiated via the partner application or the payment card;
performing, by the facilitator, a matching algorithm relative to the transaction data received to identify a matched transaction as the identified customer transaction;
communicating, by facilitator, an identity of the matched transaction to the partner; and
attributing, at the facilitator, the matched transaction to the loan responsive to receipt of an indication of authorization by the partner.

2. The method of claim 1, wherein the matching algorithm comprises:
receiving an estimated purchase amount and merchant identity information defining a future purchase from the customer;
providing loan terms associated with one or more financing options corresponding to the defined future purchase;
responsive to the customer agreeing to terms on a selected financing option, storing the financing option in association with the estimated purchase amount and the merchant identity information;
responsive to receiving an indication of a transaction between the customer and a merchant, determining whether the transaction maps to the defined future purchase; and
originating a loan to finance the transaction in accordance with the selected financing option in response to the transaction mapping to the defined future purchase.

3. The method of claim 1, wherein communicating the identity of the matched transaction comprises providing the identity of the matched transaction along with advisory information and an indication that a decision on authorization is requested from the partner based on an authorization decision made by the partner using information provided by the partner integration package,
wherein the decision on authorization provides the indication of authorization by the partner to the facilitator, and
wherein the advisory information indicates that the facilitator is capable of attributing the matched transaction to the loan.

4. The method of claim 1, wherein communicating the identity of the matched transaction comprises providing the identity of the matched transaction along with decision information and an indication that a decision on authorization is requested from the partner based on an authorization decision made by the partner using information provided by the partner integration package,
wherein the decision on authorization provides the indication of authorization by the partner to the facilitator, and
wherein the decision information indicates that the facilitator necessarily will attribute the matched transaction to the loan.

5. The method of claim 1, wherein providing the partner integration package comprises providing a promotional integration package defining executable code for displaying a selected promotion at a client device of the customer responsive to the customer accessing a web application of the partner.

6. The method of claim 5, wherein the selected promotion is determined for selection responsive to operation of a machine learning module configured to optimize promotional materials based on profile information of the customer, a merchant with which the customer engages in a transaction, or the partner.

7. The method of claim 1, wherein providing the partner integration package comprises providing an eligibility logic package, the eligibility logic package including executable code that, when executed at the hardware platform of the partner, includes an indication of purchasing power of the customer as determined by the facilitator to inform the partner regarding a likelihood that the facilitator will purchase the loan from the partner.

8. The method of claim 1, wherein providing the partner integration package comprises providing an eligibility logic package,
wherein the eligibility logic package further defines eligibility rules for a split option enabling the customer to make split payments to repay the loan to the facilitator, and includes a call to a promotion option defining display contents for display at a customer device corresponding to the split option.

9. The method of claim 1, wherein providing the partner integration package comprises providing a message identifier template defining a plurality of message identifiers used to communicate between the partner and the facilitator, and
wherein the message identifier template is updateable to provide new message identifiers or update old message identifiers to normalize data between the partner and the facilitator.

10. An apparatus for providing partner integration into processing a facilitator granted, loan backed, identified customer transaction initiated via a partner application or payment card, the apparatus comprising processing circuitry configured to perform the method of any of claims 1-9.
